(19)

Europäisches Patentamt

European Patent Office

Office européen des brevets

(11) **EP 4 294 023 A1**

(12) **EUROPEAN PATENT APPLICATION**
published in accordance with Art. 153(4) EPC

(43) Date of publication:
**20.12.2023 Bulletin 2023/51**

(51) International Patent Classification (IPC):
***H04N 21/2387*** (2011.01)

(21) Application number: **21928517.8**

(52) Cooperative Patent Classification (CPC):
**H04N 21/2387**

(22) Date of filing: **04.03.2021**

(86) International application number:
**PCT/CN2021/079055**

(87) International publication number:
**WO 2022/183431 (09.09.2022 Gazette 2022/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **PAN, Qi
Shenzhen, Guangdong 518129 (CN)**
• **HUANG, Zhenglei
Shenzhen, Guangdong 518129 (CN)**
• **NI, Hui
Shenzhen, Guangdong 518129 (CN)**

(74) Representative: **Gill Jennings & Every LLP
The Broadgate Tower
20 Primrose Street
London EC2A 2ES (GB)**

(54) **DATA PROCESSING METHOD AND DEVICE**

(57)    A data processing method and a device are provided, to meet a jitter buffer requirement of playing a real-time media service with a large amount of data, and improve real-time performance and accuracy of data transmission of the real-time media service. The method is performed in a radio access network RAN device, and includes: The RAN obtains first information of first media data, where the first information indicates a size of the first media data (S210); determines a playback policy for the first media data based on the first information, where the playback policy indicates a buffer size or a playback rate (S220); and sends the playback policy to a terminal device UE (S230).

200

FIG. 2

**Description**

**TECHNICAL FIELD**

This application relates to the communication field, and in particular, to a data processing method and a device.

**BACKGROUND**

With continuous development of communication technologies, real-time media services with a large amount of data emerge accordingly, and in particular, media services such as ultra-high definition video, virtual reality (virtual reality, VR) full-view video, and augmented reality (augmented reality, AR) video have achieved great development. These media services have high requirements on image quality and real-time interaction. Currently, to ensure a low end-to-end interaction delay, an existing media service usually uses a user datagram protocol (user datagram protocol, UDP)-based real-time transport protocol (real-time transport protocol, RTP), real-time transport control protocol (real-time transport control protocol, RTCP), and the like, and a best-effort transmission manner of the media service causes disorder and packet loss of data packet transmission. A currently used technical solution to this problem is a jitter buffer technology, for example, a static jitter buffer. However, because a fixed buffer needs to be set on user equipment, the static jitter buffer cannot ensure an interaction delay, affects user experience, and has low real-time performance and accuracy, and consequently cannot meet a requirement of a media service, such as AR/VR, that has a relatively high requirement on both image quality and real-time interaction. Therefore, how to optimize a jitter buffer to meet a requirement of a real-time media service with a large amount of data becomes an urgent problem to be resolved.

**SUMMARY**

This application provides a data processing method, to meet a jitter buffer requirement of playing a real-time media service with a large amount of data, and improve real-time performance and accuracy of data transmission of the real-time media service.

According to a first aspect, a data processing method is provided. The method is performed in a radio access network RAN device, and includes: obtaining first information of first media data, where the first information indicates a size of the first media data; determining a playback policy for the first media data based on the first information, where the playback policy indicates a buffer size or a playback rate; and sending the playback policy to a terminal device UE.

In embodiments of this application, the RAN may obtain the first information of the first media data before obtaining the first media data, or may obtain the first information together with the first media data. This is not limited in this application. The RAN assists, based on a size of the first media data, the UE in determining in advance a buffer size used to buffer the first media data, and assists the UE in determining a playback policy for media data that is to be played and that belongs to a same service as the first media data, where the playback policy may be whether the UE performs frame skipping processing on the to-be-played media data during playing or a quantity of to-be-skipped frames of the UE, and enables the UE to meet a jitter buffer requirement of playing a real-time media service with a large amount of data. In addition, real-time buffer adjustment performed based on the data amount may avoid frame loss caused by insufficient buffer. This improves smoothness and accuracy of playing the real-time media data with a large amount of data, and improves real-time user experience of a media service.

With reference to the first aspect, in some implementations of the first aspect, the first information is frame type information, or identification information corresponding to a frame type of the first media data and data amount information corresponding to the frame type.

In this embodiment of this application, the RAN may further have a capability of sensing the size of the first media data based on the frame type information or directly based on the identification information corresponding to the frame type and the data amount information corresponding to the frame type. Based on the foregoing effect, the RAN may assist, based on the frame type information and the size of the first media data obtained through sensing, the UE in determining which frames are to be skipped (the RAN may determine, based on a real-time monitored frame status in a buffer of the UE and the frame type of the first media data, which frames in to-be-played data in the buffer of the UE may be skipped and not to be played by the UE), so that the UE further improves smoothness and accuracy of playing real-time media data with a large amount of data, and improves real-time user experience of a media service.

With reference to the first aspect, in some implementations of the first aspect, the obtaining first information of first media data includes: obtaining parameter information of the first media data, where the parameter information includes the first information, and the parameter information further includes one or more of the following: stream description information of the first media data, frame rate FPS information of the first media data, buffer status information of the UE, network condition information, or a buffer threshold of the first media data, where the buffer threshold indicates a buffer size of media data played by the UE.

In this embodiment of this application, the buffer threshold of the first media data refers to a media data amount (initial buffer threshold) that the UE needs to first buffer before playing the media data to ensure real-time media data playing quality, and starts to play the media data only when the data amount is reached. The RAN may further assist, based on the foregoing parameter information, the UE in determining a buffer size used to buffer the first media data, and assist the UE in determining a playback policy for media data that is to be played and that belongs to a same service as the first media data. This further improves smoothness and accuracy of playing the real-time media data with a large amount of data, and improves real-time user experience of a media service.

With reference to the first aspect, in some implementations of the first aspect, the determining a playback policy for the first media data based on the first information includes: determining the playback policy for the first media data based on the parameter information.

With reference to the first aspect, in some implementations of the first aspect, the buffer status information includes one or more of the following: a buffer size occupied by media data to be played by the UE, information about a maximum buffer that can be used by the UE to store the first media data, or frame status information of to-be-played media data.

With reference to the first aspect, in some implementations of the first aspect, the sending the playback policy to a terminal device UE further includes: information about the playback policy is carried in radio resource control RRC information or packet data convergence protocol PDCP information; and the RAN sends the information about the playback policy to the UE.

According to a second aspect, a data processing method is provided. The method is performed in a radio access network RAN device, and includes: obtaining first information of first media data and buffer status information of a terminal device UE, where the first information indicates a size of the first media data; and determining a transmission policy for the first media data based on the first information and the buffer status information, where the transmission policy indicates a transmission rate of the first media data and/or a transmission priority of the first media data, or whether the first media data is discarded.

In this embodiment of this application, the RAN may determine, by using the first information and the buffer status information reported by the UE, whether more transmission resources need to be allocated to transmit the first media data to accelerate a transmission rate, or determine whether the UE does not need the first media data when the first media data arrives at the UE (for example, a subsequent frame of the first media data has been played), or when there are a plurality of pieces of UE, the RAN may determine, based on a buffer status of each piece of UE, whether to perform high priority transmission on the first media data, to ensure quality of playing media data by the UE. This improves smoothness and accuracy of playing real-time media data with a large amount of data, and improves real-time user experience of a media service.

With reference to the second aspect, in some implementations of the second aspect, the first information is frame type information, or identification information corresponding to a frame type of the first media data and data amount information corresponding to the frame type.

Further, the RAN may have a capability of sensing a size of the first media data based on the frame type information, or may directly determine the transmission policy for the first media data based on the identification information corresponding to the frame type and the data amount information corresponding to the frame type, to further improve smoothness and accuracy of playing real-time media data with a large amount of data, and improve real-time user experience of a media service.

With reference to the second aspect, in some implementations of the second aspect, the obtaining first information of first media data and buffer status information of a terminal device UE includes: obtaining parameter information of the first media data, where the parameter information includes the first information and the buffer status information of the terminal device UE, and the parameter information further includes one or more of the following: stream description information of the first media data, frame rate FPS information of the first media data, a buffer threshold of the first media data, where the buffer threshold indicates a buffer size of media data played by the UE, network condition information, and tolerable delay information, where the tolerable delay information indicates a time period for which the UE waits for arrival of a next frame of a currently played frame.

In this embodiment of this application, the buffer threshold of the first media data refers to a media data amount (initial buffer threshold) that the UE needs to first buffer before playing the media data to ensure real-time media data playing quality, and starts to play the media data only when the data amount is reached.

With reference to the second aspect, in some implementations of the second aspect, the buffer status information includes one or more of the following: a buffer size occupied by media data to be played by the UE, information about a maximum buffer that can be used by the UE to store the first media data, or frame status information of to-be-played media data.

With reference to the second aspect, in some implementations of the second aspect, the buffer status information includes: the buffer status information is carried in radio resource control RRC information or packet data convergence protocol PDCP information received from the UE.

With reference to the first aspect or the second aspect, in some implementations of the first aspect or the second aspect, the identification information corresponding to the frame type of the first media data is carried in general packet radio service tunneling protocol GTP information of the first media data.

According to a third aspect, a data processing method is provided. The method is performed in a user plane function UPF network element, and includes: receiving first parameter information, where the first parameter information indicates a type of first media data; receiving the first media data; determining first identification information based on the first parameter information, where the first identification information identifies a frame type of the first media data; and sending second media data to a radio access network RAN device, where the second media data includes the first identification information and the first media data.

In this embodiment of this application, the UPF identifies the first media data, to help the RAN identify a frame type of the first media data, so as to improve real-time user experience of a media service.

With reference to the third aspect, in some implementations of the third aspect, the first parameter information includes: data type information of the first media data, or identification information corresponding to a data type of the first media data, or group of pictures GOP frame sequence information of the first media data and real-time transport protocol RTP information of the first media data.

In this embodiment of this application, the data type may be, for example, a data type such as an intra-frame encoding frame (I frame), a predictive frame (P frame), or a bidirectional predictive frame (B frame) in a video stream. The I frame is used to simply encode a frame by using discrete cosine transform without using motion estimation/compensation. Motion estimation/compensation is performed on the P frame when the I frame or another P frame is involved, and then the P frame is used to encode remaining data by using discrete cosine transform. Motion compensation is performed on the B frame as motion compensation is performed on the P frame. However, motion estimation/compensation is performed on two frames on a time axis. Another similar data type may alternatively be referred to. This is not limited in this application.

With reference to the third aspect, in some implementations of the third aspect, the first identification information is carried in information about a general packet radio service tunneling protocol GTP layer of second media data.

According to a fourth aspect, a data processing method is provided. The method is performed in a terminal device UE, and includes: sending buffer status information of the UE to a radio access network RAN, where the buffer status information is used to determine a playback policy for the UE, and the playback policy indicates a buffer size or a playback rate; and receiving the playback policy from the RAN.

In this embodiment of this application, the UE sends the buffer status information to the RAN, to help the RAN formulate a media data playing policy for the UE, thereby improving real-time user experience of a media service.

With reference to the fourth aspect, in some implementations of the fourth aspect, the buffer status information includes one or more of the following: a buffer size occupied by media data to be played by the UE, information about a maximum buffer that can be used by the UE to store first media data, or frame status information of to-be-played media data.

With reference to the fourth aspect, in some implementations of the fourth aspect, the buffer status information is carried in radio resource control RRC information or packet data convergence protocol PDCP information.

According to a fifth aspect, a data processing method is provided. The method is performed in a first media server, and includes: determining first service information, where the first service information includes at least one of the following: stream description information of first media data, type information of the first media data, frame rate information of the first media data, frame sequence information of a group of pictures GOP of the first media data, data amount information corresponding to a type of the first media data, jitter buffer initial threshold information of the first media data, tolerable delay information of the first media data, or identification information corresponding to the type of the first media data; sending the first service information; and sending the first media data.

In this embodiment of this application, the media server delivers the first service information, to help a core network device formulate a transmission policy of the first media data and a playback policy for the UE, thereby improving real-time user experience of a media service.

According to a sixth aspect, a data processing method is provided. The method is performed in a terminal device UE, and includes: obtaining first information of first media data, where the first information indicates a size of the first media data; determining a playback policy corresponding to the first media data based on the first information, where the playback policy indicates a buffer size or a playback rate; and executing the playback policy.

In this embodiment of this application, before receiving the first media data, the UE obtains the first information of the first media data. The UE may determine, in advance based on a size of the first media data, a buffer size used to buffer the first media data, and determine a playback policy for to-be-played media data that belongs to a same service as the first media data. The playback policy may be whether the UE performs frame skipping processing on the to-be-played media data or a quantity of to-be-skipped frames of the UE, the UE is enabled to meet a jitter buffer requirement of playing a real-time media service with a large amount of data. In addition, real-time buffer adjustment performed based on the data amount may avoid frame loss caused by insufficient buffer. This improves smoothness and accuracy of playing the real-time media data with a large amount of data, and improves real-time user experience of a media service.

With reference to the sixth aspect, in some implementations of the sixth aspect, the first information is frame type information, or identification information corresponding to a frame type of the first media data and data amount information corresponding to the frame type.

With reference to the sixth aspect, in some implementations of the sixth aspect, the obtaining first information of first media data includes: obtaining parameter information of the first media data, where the parameter information includes the first information, and the parameter information further includes one or more of the following: stream description information of the first media data, frame rate FPS information of the first media data, a buffer threshold of the first media data, where the buffer threshold indicates a buffer size of media data played by the UE, buffer status information of the UE, network condition information, frame sequence information of a group of pictures GOP of the first media data, tolerable delay information of the first media data, where the tolerable delay information indicates a time period for which the UE waits for arrival of a next frame of a currently played frame, and first transmission rate information, where the first transmission rate information indicates a network transmission rate between the UE and a radio access network RAN.

With reference to the sixth aspect, in some implementations of the sixth aspect, the determining a playback policy corresponding to the first media data based on the first information includes: determining the playback policy for the first media data based on the parameter information.

With reference to the sixth aspect, in some implementations of the sixth aspect, the identification information corresponding to the frame type of the first media data is carried in information about a general packet radio service tunneling protocol GTP layer of the first media data.

With reference to the sixth aspect, in some implementations of the sixth aspect, the buffer status information includes one or more of the following: a buffer size occupied by media data to be played by the UE, information about a maximum buffer that can be used by the UE to store the first media data, or frame status information of to-be-played media data.

According to a seventh aspect, a data processing apparatus is provided. The apparatus includes at least one processor and a communication interface. The at least one processor is configured to invoke a computer program stored in at least one memory, so that the data processing apparatus performs the method in any one of the first aspect or the possible implementations of the first aspect.

According to an eighth aspect, a data processing apparatus is provided. The apparatus includes at least one processor and a communication interface. The at least one processor is configured to invoke a computer program stored in at least one memory, so that the data processing apparatus performs the method according to any one of the second aspect or the possible implementations of the second aspect.

According to a ninth aspect, a data processing apparatus is provided. The apparatus includes at least one processor and a communication interface. The at least one processor is configured to invoke a computer program stored in at least one memory, so that the data processing apparatus performs the method in any one of the third aspect or the possible implementations of the third aspect.

According to a tenth aspect, a data processing apparatus is provided. The apparatus includes at least one processor and a communication interface. The at least one processor is configured to invoke a computer program stored in at least one memory, so that the data processing apparatus performs the method according to any one of the fourth aspect or the possible implementations of the fourth aspect.

According to an eleventh aspect, a data processing apparatus is provided. The apparatus includes at least one processor and a communication interface. The at least one processor is configured to invoke a computer program stored in at least one memory, so that the data processing apparatus performs the method according to any one of the fifth aspect or the possible implementations of the fifth aspect.

According to a twelfth aspect, a data processing apparatus is provided. The apparatus includes at least one processor and a communication interface. The at least one processor is configured to invoke a computer program stored in at least one memory, so that the data processing apparatus performs the method according to any one of the sixth aspect or the possible implementations of the sixth aspect.

According to a thirteenth aspect, a computer-readable storage medium is provided. The computer-readable storage medium stores a computer program. When the computer program is run, an apparatus is enabled to perform the method according to any one of the first aspect or the possible implementations of the first aspect, or the apparatus is enabled to perform the method according to any one of the second aspect or the possible implementations of the second aspect, or the apparatus is enabled to perform the method according to any one of the third aspect or the possible implementations of the third aspect, or the apparatus is enabled to perform the method according to any one of the fourth aspect or the possible implementations of the fourth aspect, or the apparatus is enabled to perform the method according to any one of the fifth aspect or the possible implementations of the fifth aspect, or the apparatus is enabled to perform the method according to any one of the sixth aspect or the possible implementations of the sixth aspect.

According to a fourteenth aspect, a chip system is provided, and includes: a processor, configured to invoke and run a computer program from a memory, so that a communication apparatus in which the chip system is installed performs the method according to any one of the first aspect or the possible implementations of the first aspect; or a communication apparatus in which the chip system is installed performs the method according to any one of the second aspect or the possible implementations of the second aspect; or a communication apparatus in which the chip system is installed performs the method according to any one of the third aspect or the possible implementations of the third aspect; or a communication apparatus in which the chip system is installed performs the method according to any one of the fourth aspect or the possible implementations of the fourth aspect; or a communication apparatus in which the chip system is installed performs the method according to any one of the fifth aspect or the possible implementations of the fifth aspect; or a communication apparatus in which the chip system is installed performs the method according to any one of the sixth aspect or the possible implementations of the sixth aspect.

According to a fifteenth aspect, a communication system is provided, and includes: a network device, configured to perform the method according to any one of the first aspect or the possible implementations of the first aspect, or configured to perform the method according to any one of the second aspect or the possible implementations of the second aspect, or configured to perform the method according to any one of the third aspect or the possible implementations of the third aspect, or configured to perform the method according to any one of the fifth aspect or the possible implementations of the fifth aspect; and a terminal device, configured to perform the method according to any one of the fourth aspect or the possible implementations of the fourth aspect, or configured to perform the method according to any one of the sixth aspect or the possible implementations of the sixth aspect.

According to an eleventh aspect, a computer program product is provided. The computer program product includes computer program code. When the computer program code is run by a network device, the network device is enabled to perform the method according to any one of the first aspect or the possible implementations of the first aspect, the method according to any one of the second aspect or the possible implementations of the second aspect, the method according to any one of the third aspect or the possible implementations of the third aspect, or the method according to any one of the fifth aspect or the possible implementations of the fifth aspect.

According to a twelfth aspect, a computer program product is provided. The computer program product includes computer program code. When the computer program code is run by a terminal device, the terminal device is enabled to perform the method according to the fourth aspect or any one of the possible implementations of the fourth aspect, or the method according to the sixth aspect or any one of the possible implementations of the sixth aspect.

## BRIEF DESCRIPTION OF DRAWINGS

FIG. 1 is a schematic diagram of a 5G communication system to which an embodiment of this application is applied;
FIG. 2 is a schematic flowchart of an example of a data processing method according to an embodiment of this application;
FIG. 3A and FIG. 3B are a schematic flowchart of an example of a session establishment method according to an embodiment of this application;
FIG. 4 is a schematic flowchart of another example of a data processing method according to an embodiment of this application;
FIG. 5 is a schematic flowchart of still another example of a data processing method according to an embodiment of this application;
FIG. 6 is a schematic block diagram of an example of a network device according to an embodiment of this application;
FIG. 7 is a schematic block diagram of an example of a terminal device according to an embodiment of this application;
FIG. 8 is a schematic block diagram of another example of a network device according to an embodiment of this application; and
FIG. 9 is a schematic block diagram of another example of a terminal device according to an embodiment of this application.

## DESCRIPTION OF EMBODIMENTS

The following describes technical solutions of this application with reference to accompanying drawings. It is clear that the described embodiments are a part rather than all of embodiments of the present invention. All other embodiments obtained by a person of ordinary skill in the art based on embodiments of the present invention without creative efforts shall fall within the protection scope of the present invention.

Methods in embodiments of this application may be applied to a long term evolution (long term evolution, LTE) system, a long term evolution-advanced (long term evolution-advanced, LTE-A) system, an enhanced long term evolution (enhanced long term evolution-advanced, eLTE) system, a 5th Generation (the 5th Generation, 5G) mobile communication system new radio (new radio, NR) system, or may be extended to a similar wireless communication system such as a wireless-fidelity (wireless-fidelity, Wi-Fi), worldwide interoperability for microwave access (worldwide interoperability for microwave access, WIMAX), or future 6th generation (6th generation, 6G) system, and a cellular system related to the 3rd generation partnership project (3rd generation partnership project, 3gpp).

In embodiments of this application, a network device is an apparatus deployed in a radio access network and configured to provide a wireless communication function for a terminal device. The network device may include various forms of base stations, macro base stations, micro base stations (also referred to as small cells), relay stations, access points, or various network element devices in a core network (core network, CN). In systems that use different radio access technologies, names of devices having base station functions may vary. For example, the network device may be an access point (access point, AP) in a wireless local area network (wireless local area networks, WLAN) or may be a base transceiver station (base transceiver station, BTS) in a global system for mobile communication (global system for mobile communication, GSM) or code division multiple access (code division multiple access, CDMA). Alternatively, the base station may be a NodeB (5G NodeB, gNB) in a 5G system or an evolved NodeB (evolved NodeB, eNB or eNodeB) in an LTE system. Alternatively, the network device may be a NodeB (NodeB) in a third generation (3rd generation, 3G) system. In addition, the network device may alternatively be a relay station, an access point, a vehicle-mounted device, a wearable device, a radio access network (radio access network, (R)AN) network device in a fifth-generation (fifth-generation, 5G) communication network, a network device in a future evolved public land mobile network (public land mobile network, PLMN) network, or the like.

A terminal device in embodiments of this application may alternatively be referred to as user equipment (user equipment, UE), an access terminal, a terminal device unit (subscriber unit), a terminal device station, a mobile console, a mobile station (mobile station, MS), a remote station, a remote terminal, a mobile device, a user terminal, a terminal (terminal), a wireless communication device, a terminal device agent, or a terminal device apparatus. The terminal device may include various handsets, vehicle-mounted devices, wearable devices, or computing devices that have a wireless communication function, or other processing devices connected to a wireless modem. The terminal device may further include a user unit, a cellular phone (cellular phone), a smart phone (smart phone), a wireless data card, a personal digital assistant (personal digital assistant, PDA) computer, a tablet computer, a wireless modem (modem), a handset (handset), a laptop computer (laptop computer), a machine type communication (machine type communication, MTC) terminal, or a station (station, ST) in a wireless local area network (wireless local area networks, WLAN). The terminal device may be a cellular phone, a cordless telephone, a session initiation protocol (session initiation protocol, SIP) telephone, a wireless local loop (wireless local loop, WLL) station and a next-generation communication system, for example, a terminal device in a 5G network, or a terminal device in a future evolved PLMN network.

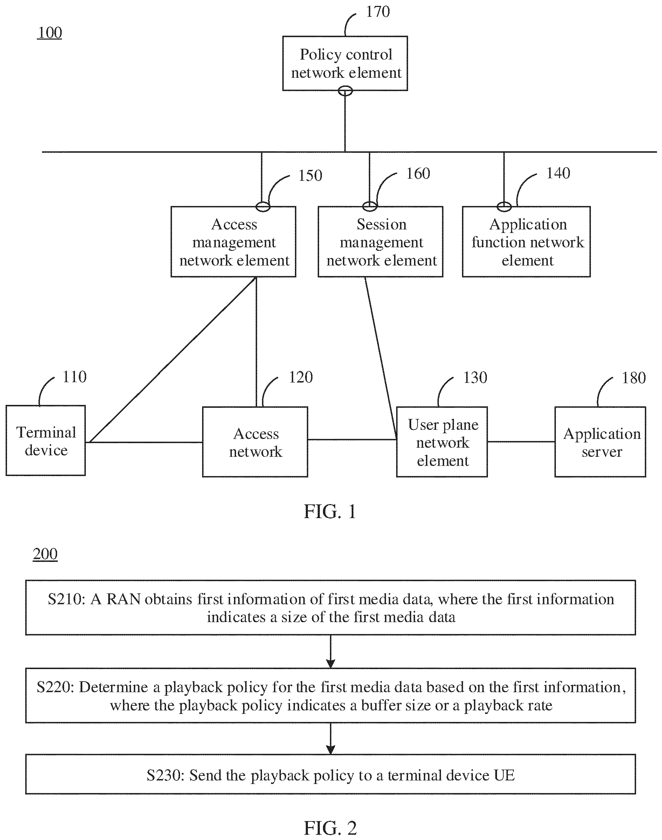

A 5G core network is used as an example to describe embodiments of this application. FIG. 1 is a schematic diagram of a 5G communication system 100 applied to an embodiment of this application. The communication system includes at least a terminal device 110, a (radio) access network (radio access network, (R)AN) network element 120, a user plane network element 130, an application function network element 140, an access management network element 150, a session management network element 160, and a policy control network element 170.

It should be noted that, in all embodiments of this application, the "network element" may also be referred to as an entity, a device, an apparatus, a module, or the like. This is not particularly limited in this application. For ease of understanding and description, the description of the "network element" is omitted in some descriptions. For example, a (R)AN network element is briefly referred to as (R)AN. In this case, the "(R)AN network element" should be understood as a (R)AN network element or a (R)AN entity. Same or similar cases are not described in the following.

As shown in FIG. 1, for the terminal device 110, refer to the foregoing descriptions about the terminal device. Details are not described herein again.

As shown in FIG. 1, for the (radio) access network (radio access network, (R)AN) network element 120, refer to the foregoing descriptions about the network device. Details are not described herein again.

As shown in FIG. 1, the user plane network element 130 may be connected to a same data network or different data networks, to implement data transmission of a service. Optionally, the user plane network element 130 may be further configured to perform packet routing and forwarding, quality of service (quality of service, QoS) processing on user plane data, and the like.

In a 5G communication system, the user plane network element may be a user plane function (user plane function, UPF) network element. In a future communication system, the user plane network element may still be the UPF network element, or may have another name. This is not limited in this application.

As shown in FIG. 1, an application function (application function, AF) network element 140 is configured to implement information exchange between an external server and a 3GPP network.

As shown in FIG. 1, the access management network element 150 is mainly configured to perform mobility management, access management, and the like. The access management network element 150 may be configured to implement another function other than session management in a mobility management entity (mobility management entity, MME) function, for example, functions such as lawful interception and access authorization/authentication, and an attach procedure, a mobility management procedure, and a tracking area update procedure of the terminal device.

In a 5G communication system, the access management network element may be an access and mobility management function (access and mobility management function, AMF) network element. In a future communication system, the access management network element may still be the AMF network element, or may have another name. This is not limited in this application.

As shown in FIG. 1, the session management network element 160 is configured to perform session management. For example, the session management includes selection of a user plane device, re-selection of a user plane device, network protocol address allocation, quality of service (quality of service, QoS) control, establishment, modification, or release of a session, allocation and management of an internet protocol (internet protocol, IP) address of a terminal device, selection and management for a user plane function, a termination point of a policy control and charging function interface, and downlink data notification.

In a 5G communication system, the session management network element may be a session management function (session management function, SMF) network element. In a future communication system, the session management network element may still be the SMF network element, or may have another name. This is not limited in this application.

As shown in FIG. 1, the policy control network element 170 is configured to guide a unified policy framework for network behavior, and includes functions of policy control and flow-based charging control. For example, the policy control network element 170 may provide policy rule information for a control plane function network element (for example, an AMF or an SMF network element), to implement a user subscription data management function, a policy control function, a charging policy control function, QoS control, and the like.

As shown in FIG. 1, an application server (application service, AS) 180 is configured to determine and send media service data.

In a 4G communication system, the policy control network element may be a policy and charging rules function (policy and charging rules function, PCRF) network element. In a 5G communication system, the policy control network element may be a policy control function (policy control function, PCF) network element. In a future communication system, the policy control network element may still be the PCF network element, or may have another name. This is not limited in this application.

The foregoing network elements may be network elements implemented on dedicated hardware, or may be software instances running on dedicated hardware, or may be instances of virtualization functions on a virtualization platform. For example, the foregoing virtualization platform may be a cloud platform.

In addition, embodiments of this application are also applicable to another future-oriented communication technology. Network architectures and service scenarios described in this application are intended to describe the technical solutions in this application more clearly, and do not constitute a limitation on the technical solutions provided in this application. A person of ordinary skill in the art may know that with evolution of network architectures and emergence of new service scenarios, the technical solutions provided in this application are also applicable to similar technical problems.

FIG. 2 is a flowchart of a data processing method 200 according to an embodiment of this application. The method may be applied to another scenario in which a large amount of data is exchanged in real time in an AR/VR service and the like in the foregoing 5G communication system. The method may include:

S210: A RAN obtains first information of first media data, where the first information indicates a size of the first media data.

In a possible implementation, the first information includes one or more of the following information:

A frame type is included. The frame type may be a data type such as an intra-frame encoding frame (I frame), a predictive frame (P frame), or a bidirectional predictive frame (B frame) in a video stream. The I frame is used to simply encode a frame by using discrete cosine transform without using motion estimation/compensation. Motion estimation/compensation is performed on the P frame when the I frame or another P frame is involved, and then the P frame is used to encode remaining data by using discrete cosine transform. Motion compensation is performed on the B frame as motion compensation is performed on the P frame. However, motion estimation/compensation is performed on two frames on a time axis. This may alternatively be another manner of identifying a data type. A frame type may be represented in a GOP frame sequence. For example, when a group of pictures (group of pictures, GOP) include nine frames: I, B, B, P, B, B, P, B and B in sequence, the RAN may record an arrival sequence of media data according to this rule to obtain a frame type, or may enable a frame to carry a frame sequence number (identifier #A), and obtain the frame type by dividing the frame sequence number by a remainder of 9 and corresponding to a sequence in the GOP. Assuming that the frame sequence number starts from 0, when the remainder is 0, the frame type is an I frame; when the remainder is 1, the frame type is a B frame; and so on. Other remainders represent a frame type in sequence.

Identification information corresponding to a frame type is included. The identification information identifies different frame types. For example, two bits "00" represent an I frame, "01" represents a P frame, and "10" represents a B frame. It should be understood that a type of the identification information is not limited in this application, and the identification information may be carried in general packet radio service tunneling protocol GTP information of the first media data.

Data amount information corresponding to a frame type is included. Data amount refers to a data size of the frame type, for example, a data amount, that is, a data size of the I frame is 5 KB, where the data amount may be a statistical value, for example, may be a data amount of the I frame collected by using an average value obtaining method, or may be collected by using another calculation method. This is not limited in this application.

In a possible implementation, the RAN obtains parameter information of the first media data, where the parameter information includes the first information, and the parameter information may further include one or more of the following information in addition to the first information:

Flow description information (which may be IP triplet information and may correspond to a service to which the first media data belongs) is included and can represent content such as an IP address of an application server, a port number used by the application server to send the media data, and a protocol used to send the media data. The media data may be media data such as an ultra-high definition video stream, a VR video stream, or voice data. Different flow description information corresponds to different media servers.

Frame rate (frames per second, FPS) information, that is, a quantity of frames transmitted by the first media data per second, a quantity of frames output by an encoder per second after encoding, or a quantity of frames played by a playing end per second is included.

Jitter buffer initial threshold information, that is, a size of data to be buffered before a media player of the UE first plays media data belonging to the service is included.

Tolerable delay information, that is, a time period for which a media player of the UE waits for arrival of a next frame of a currently played frame is included. For example, when the UE plays the fifth frame, if the UE does not receive the sixth frame within 5 ms, the UE skips the sixth frame and plays the seventh frame. The 5 ms is a tolerable delay. If the tolerable delay is exceeded, the corresponding frame is no longer necessary to be played.

Buffer status information of the UE is included. The buffer status information includes one or more of the following: a buffer size occupied by media data to be played by the UE, information about a maximum buffer that can be used by the UE to store first media data, or frame status information of to-be-played media data, where the to-be-played media data and the first media data belong to a same service, the to-be-played media data is media data to be played in a buffer of the UE, and the buffer status information may be carried in radio resource control RRC information or packet data convergence protocol PDCP information sent by the UE.

Network condition information is included. The network condition information is a transmission rate between the RAN and the UE.

S220: The RAN determines a playback policy for the first media data based on the first information, where the playback policy indicates a buffer size or a playback rate.

The playback policy may be used to indicate a buffer size used by a terminal device to buffer the first media data, or used to indicate whether frame skipping is needed when the terminal device plays the to-be-played media data, or used to indicate a quantity of frames need to be skipped or specific frames need to be skipped if the frame skipping is needed. The playback policy information may be carried in radio resource control RRC information or packet data convergence protocol PDCP information.

The RAN may determine the playback policy for the first media data based on the first information in the following several manners:

Manner 1

The RAN determines the playback policy of the UE based on frame type information of the first media data. For example, if the frame type of the first media data is the I frame, the playback policy indicates that a buffer size of the UE is 50 M; and/or a specific quantity of frames of remaining types other than the I frame in the playback buffer are skipped (for example, four frames may be skipped) (a speed at which a human eye recognizes coherent images is 24 frames per second. As long as a playback speed is greater than 24 frames per second, image coherence is not affected. In addition, due to a GOP image encoding feature, skipping and not playing of some frames other than key frames (discarding some frames without playing) does not have any substantial impact).

Manner 2

The RAN determines the playback policy of the UE based on an identifier of a frame type of a GTP layer of the first media data. For example, when the identifier of the GTP layer of the first media data is "00", and the frame type corresponding to the identifier is the I frame, the playback policy indicates that a buffer size of the UE is 50 M; and/or a specific quantity of frames of remaining types other than the I frame in the playback buffer are skipped (for example, four frames may be skipped).

Manner 3

The RAN determines the playback policy of the UE based on a data amount of the first media data. For example, when the data amount of the first media data is 5 M, the playback policy indicates that the buffer size of the UE is 50 M; and/or a specific quantity of frames of remaining types other than the I frame in the playback buffer are skipped (for example, two frames may be skipped). For another example, when the data amount of the first media data is 10 M, the playback policy indicates that a buffer size of the UE is 80 M; and/or a specific quantity of frames of remaining types other than the I frame in the playback buffer are skipped (for example, four frames may be skipped).

The RAN may determine the playback policy for the first media data based on the parameter information in the following several manners:

Manner 4

The RAN determines the playback policy of the UE based on frame rate information of the first media data. For example, when the frame rate of the first media data is 25 FPS, the playback policy indicates that a buffer size of the UE is 50 M; and/or a specific quantity of frames of remaining types other than the I frame in the playback buffer are skipped (for example, two frames may be skipped). For another example, when the frame rate of the first media data is 30 FPS, the playback policy indicates that a buffer size of the UE is 80 M; and/or a specific quantity of frames of remaining types other than the I frame in the playback buffer are skipped (for example, four frames may be skipped).

Manner 5

The RAN determines the playback policy of the UE based on jitter buffer initial threshold information of the first media data. For example, when a jitter buffer initial threshold of the first media data is 5M, the playback policy indicates that a buffer size of the UE is 50M; and/or a specific quantity of frames of remaining types other than the I frame in the playback buffer are skipped (for example, two frames may be skipped). For another example, when a jitter buffer initial threshold of the first media data is 10 M, the playback policy indicates that a buffer size of the UE is 80 M; and/or a specific quantity of frames of remaining types other than the I frame in the playback buffer are skipped (for example, four frames may be skipped).

Manner 6

The RAN determines the playback policy of the UE based on tolerable delay information of the first media data. For example, when a tolerable delay of the first media data is 5 ms, the playback policy indicates that a buffer size of the UE is 50 M; and/or a specific quantity of frames of remaining types other than the I frame in the playback buffer are skipped (for example, two frames may be skipped). For another example, when a tolerable delay of the first media data is 2 ms, the playback policy indicates that a buffer size of the UE is 80 M; and/or a specific quantity of frames of remaining types other than the I frame in the playback buffer are skipped (for example, four frames may be skipped).

Manner 7

The RAN determines the playback policy of the UE based on buffer status information of the UE. For example, whether an idle buffer of the UE exceeds 50 M is determined. If the idle buffer exceeds 50 M, the playback policy indicates that a buffer size of the UE #A is 60 M and no frame is skipped; or if the idle buffer does not exceed 50 M, the playback policy indicates that a buffer size of the UE #A is 80 M, and/or a specific quantity of frames of remaining types other than the I frame in the playback buffer are skipped (for example, two frames may be skipped).

Manner 8

The RAN determines the playback policy of the UE based on network condition information of the UE. For example, whether a transmission rate between the RAN and the UE exceeds 50 Mbps is determined. If the transmission rate exceeds 50 Mbps, the playback policy indicates that a buffer size of the UE #A is 50 M, or no frame is skipped; or if the transmission rate exceeds 50 Mbps, the playback policy indicates that a buffer size of the UE #A is 80 M, and/or a specific quantity of frames of remaining types other than the I frame in the playback buffer are skipped (for example, two frames may be skipped).

It should be understood that the RAN may further combine the foregoing manners to determine the playback policy of the UE, for example, determine the playback policy of the UE based on an identifier of a frame type of the first media data and a data amount corresponding to the frame type. For a manner of determining the playback policy, refer to the foregoing Manner 1 and Manner 3. Other manners are deduced by analogy. Details are not described herein again in this application.

S230: Send the playback policy to a terminal device UE.

In embodiments of this application, the RAN may obtain the first information of the first media data before obtaining the first media data, or may obtain the first information together with the first media data. This is not limited in this application. The RAN assists, based on a size of the first media data, the UE in determining in advance a buffer size used to buffer the first media data, assists the UE in determining a playback policy for media data that is to be played and that belongs to a same service as the first media data, and enables the UE to meet a jitter buffer requirement of playing a real-time media service with a large amount of data. In addition, real-time buffer adjustment performed based on the data amount may avoid frame loss caused by insufficient buffer. This improves smoothness and accuracy of playing the real-time media data with a large amount of data, and improves real-time user experience of a media service.

In this application, an example in which UE #A, a RAN #A, an AMF #A, an SMF #A, a UPF #A, a PCF #A, and an AF #A are the foregoing network elements are used for description of the embodiments.

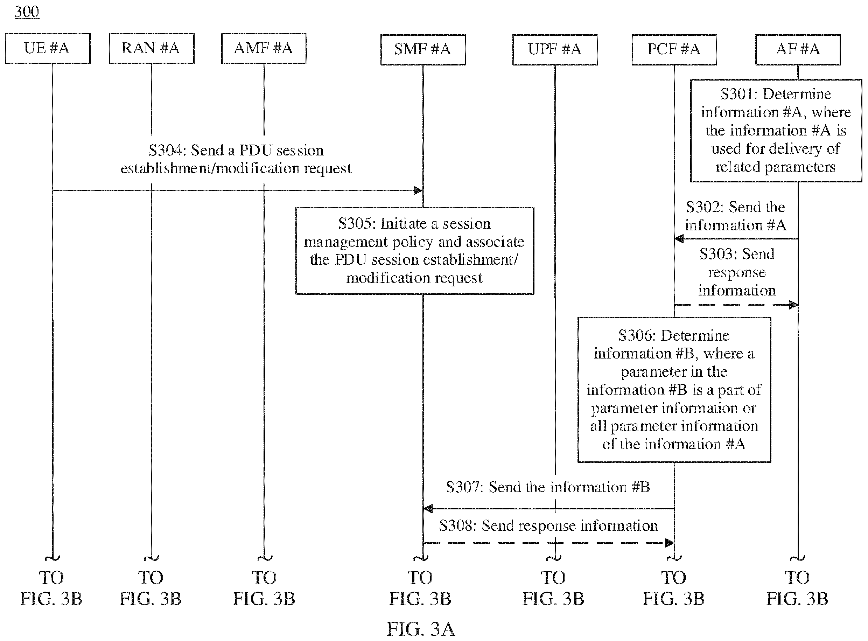

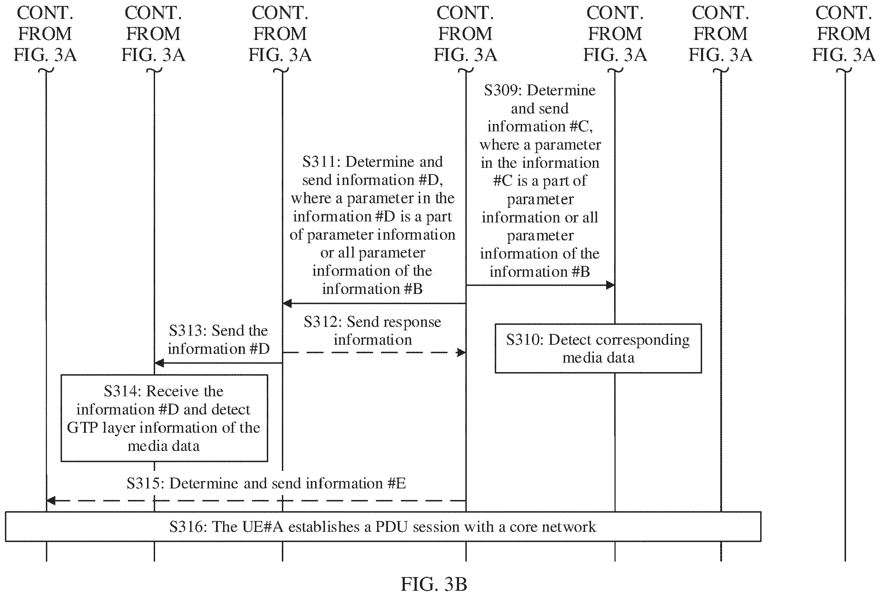

FIG. 3A and FIG. 3B are a schematic flowchart of an example of a session establishment method 300 according to an embodiment of this application.

As shown in FIG. 3A and FIG. 3B, in S301, the AF #A determines information #A, where the information #A indicates a related parameter in embodiments of this application.

As an example instead of a limitation, parameter information of the information #A includes at least one of the following information: stream description information, frame rate information, jitter buffer initial threshold information, tolerable delay information, frame sequence information in a GOP, a frame type and an identifier #A and correspondence information between the frame type and the identifier #A, frame type information, or a frame type and data amount information corresponding to the frame type. For descriptions of the foregoing information, refer to the descriptions in the method 200. Details are not described herein again.

Specifically, the information #A comes from the AS#A, and the AS#A interacts with a 3GPP network by using the AF #A. The information #A may be finally determined by the AF #A, or may be sent to the AF #A after being determined by the AS#A. This is not limited herein.

In a possible implementation, the application server AS#A may further determine media data information #F and send the media data information #F to the UPF #A. The media data information #F includes media data #A. The media data #A may be media data such as a video stream or voice data, and may further include an identifier #A. For example, an identifier #A of media data #A1 is "00", indicating an I frame, and an identifier #A of media data #A2 is "01", indicating a P frame. It should be understood that a type of the identifier #A is not limited in this application. Alternatively, a frame type is identified by using a frame sequence number method (that is, the identifier #A is a frame sequence number). For example, when a group of pictures (group of pictures, GOP) includes nine frames: I, B, B, P, B, B, P, B and B in sequence, a frame may carry a frame sequence number (identifier #A), and then a frame type is obtained by dividing the frame sequence number by a remainder of 9 and corresponding to a sequence in the GOP. Assuming that the frame sequence number starts from 0, when the remainder is 0, the frame type is an I frame; when the remainder is 1, the frame type is a B frame; and so on. Other remainders represent a frame type in sequence. In this manner, the media data #A and the identifier #A may be simultaneously sent to the UPF #A, and the UPF #A may identify and process the media data #A.

It should be understood that, in addition to the "I frame", the "B frame", and the "P frame", the type of the media data may be represented by a frame sequence number in a GOP, or may be a corresponding different frame type in another encoding technology, for example, a P frame, a Golden frame, and an AltRef frame in a VP8/VP9 encoding technology. The type of the media data is not limited in this application.

S302: The AF #A sends information #A to the PCF #A by requesting an AF Request by the application function network element, and the PCF #A receives the information #A.

Optionally, in S303, the PCF #A sends response information to the AF #A, to indicate that the indication information #A is successfully received, and the AS#A receives the response information.

In S304, the UE #A sends protocol data unit (protocol data unit, PDU) session establishment/modification request PDU Session Establishment/Modification Request information to the AMF side by using a non-access stratum (non-access stratum, NAS) message, the AMF side sends the request information to the SMF #A, and the SMF #A receives the request information.

In S305, the SMF #A initiates a session management policy association request to the PCF #A.

Specifically, the SMF #A initiates a session management policy association request to the PCF #A by using an AMF service-oriented interface PDU session establishment/update session management content Namf_PDUSession_Create/UpdateSMContext.

In S306, the PCF #A determines information #B.

Specifically, the PCF #A determines the information #B based on the information #A. Parameter information of the information #B may be a part of parameter information or all parameter information of the information #A. Details are not described herein in this application.

In a possible implementation, the flow description information may be carried in a policy and charging control rule (Policy and Charging Control Rule, PCC). To be specific, the PCF determines a traffic flow template in the PCC rule based on the flow description information, and the correspondence information between the frame type and the identifier #A may also be carried in the PCC.

In S307, the PCF #A sends the information #B to the SMF #A, and the SMF#A receives the information #B.

Specifically, the PCF #A establishes/modifies SM Policy Association Establishment/Modification information to send the information #B by using session management policy association.

In a possible implementation, the PCF #A determines traffic flow template (Service Data Flow template) information (information #B) based on the flow description information, and then sends the traffic flow template information to the SMF #A, so that the SMF #A determines a corresponding packet detection rule PDR based on the traffic flow template information and sends the packet detection rule PDR to the UPF #A.

Optionally, in S308, the SMF #A sends response information to the PCF #A, to indicate that the information #B is successfully received, and the PCF #A receives the response information.

In S309, the SMF #A determines information #C, and sends the information #C to the UPF #A.

Specifically, the SMF #A sends the information #C to the UPF #A based on the information #B and N4 session establishment N4 Session Establishment. Parameter information of the information #C may be a part of parameter information or all parameter information of the information #B. Details are not described herein again in this application. For example, the PCF #A determines traffic flow template information (information #B) based on the flow description information, and then sends the traffic flow template information to the SMF #A. The SMF #A determines a corresponding packet detection rule (packet detection rules, PDR) (information #C) based on the traffic flow template information, and the frame type, the identifier #A, and correspondence information between the frame type and the identifier #A may be carried in the PDR.

The information #C may further include execution rule indication information, used to indicate a manner in which the UPF #A identifies the frame type of the media data, for example, a manner of identifying the frame type of the media data based on GOP frame sequence information and a timestamp and a sequence number that are in the RTP, or a manner of identifying the frame type of the media data based on the frame type, the identifier #A, and correspondence information between the frame type and the identifier #A, or the UPF #A performs enhanced parsing on the media data packets to determine frame types of different data. It should be understood that the execution rule indication information may alternatively be configured in the UPF #A in a manner of enhancing the UPF #A.

In S310, the UPF #A detects a frame type of received media data.

Specifically, the UPF #A detects the frame type of the received media data based on the information #C, where the information #C includes one or more of a timestamp and a sequence number in the RTP, and GOP frame sequence information or the identifier #A.

In S311, the SMF #A determines information #D, and sends the information #D to the AMF #A.

Specifically, the SMF #A determines the information #D based on AMF service-oriented interface communication N1N2 message transfer Namf_CommunicationN1N2MessageTransfer and the information #B. Parameter information of the information #D may be a part of parameter information or all parameter information of the information #B. Details are not described herein in this application.

The information #D may further include execution rule indication information, used to indicate a manner of identifying the frame type of the media data by the RAN #A. The manner may be a manner of identifying the frame type of the media data based on GOP frame sequence information and a timestamp and a sequence number that are in the RTP, or may be a manner of identifying the frame type of the media data based on the frame type, the identifier #A, and correspondence information between the frame type and the identifier #A, or a manner of identifying the frame type of the media data based on an identifier #H (that is, after identifying which data packets belongs to a same frame, a data amount of the frame may be sensed). (In this application, identifying the frame type of the media data by the RAN #A may be understood as: identifying the type of the media data belonging to the same frame, to learn a size of the frame data based on the type, or directly sense the size of the media data belonging to the same frame without identifying the type of the frame data). It should be understood that the execution rule indication information may alternatively be configured in the RAN #A in a manner of enhancing the RAN #A.

Optionally, in S312, the AMF #A sends response information to the SMF #A, to indicate that the information #D is successfully received, and the SMF #A receives the response information.

In S313, the AMF #A forwards the information #D to the RAN #A, and the RAN #A receives the information #D.

Specifically, the AMF #A forwards the information #D to the RAN #A by using N2 PDU session request N2 PDU Session Request information or by using N2 session management N2 SM information.

In S314, the RAN #A detects general packet radio service tunneling protocol (general packet radio service tunneling protocol), GTP) layer extension information of the media data #A based on the information #D, where the GTP layer extension information includes frame type information of the media data #A.

Optionally, the RAN #A stores the information #D.

Optionally, in S315, the SMF #A determines information #E, and sends the information #E to the UE #A.

Specifically, the SMF #A determines the information #E based on the information #B. Parameter information of the information #E may be a part of parameter information or all parameter information of the information #B. Details are not described in this application again. The information #E may further include execution rule indication information, used to indicate the UE #A to perform corresponding cache adjustment based on policy information delivered by the RAN #A. It should be understood that the information may also be configured as configuration information in the UE #A. This is not limited in this application.

In S316, the UE #A establishes a PDU session with a core network.

In embodiments of this application, in a PDU session establishment process of the UE #A, related encoding information of a corresponding media stream from the AS#A on a server side, such as a frame rate, a data amount corresponding to a frame type, a tolerable delay, a frame sequence in a GOP, or a jitter buffer initial threshold on a UE side can be delivered to an explicit node in a user plane data transmission process of the UE #A/RAN #A/UPF #A. In addition, parameter sending is implemented for subsequent implementation of an optimization solution for real-time transmission of a large amount of data. It should be understood that the foregoing parameters may be delivered before media data transmission, or may be delivered during the media transmission. This is not limited in this application.

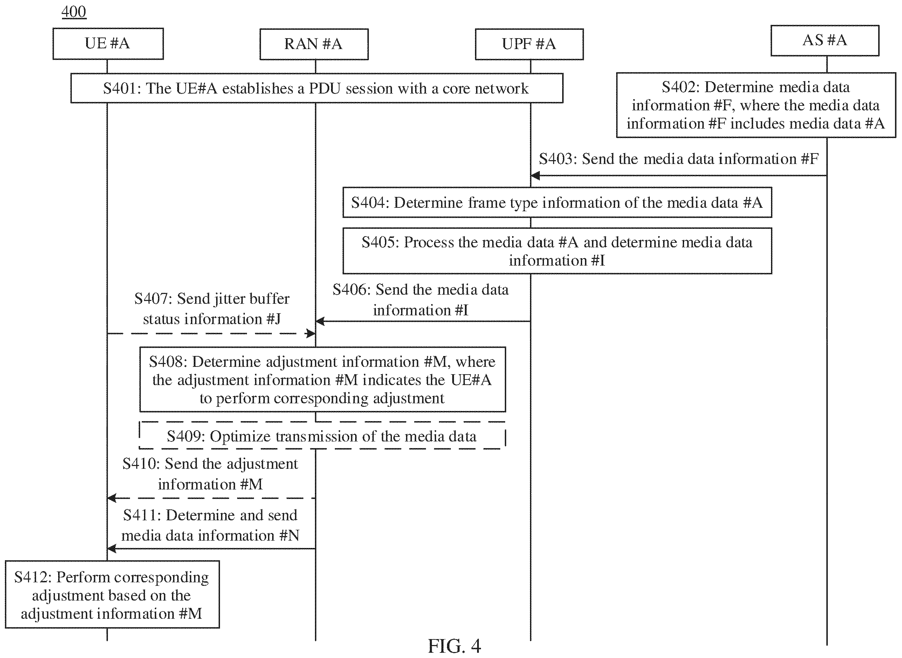

FIG. 4 is a schematic flowchart of an example of a data processing method 400 according to an embodiment of this application.

In S401, the UE #A establishes a PDU session with a core network. For a specific process, refer to the method 300. Details are not described herein in this application.

In S402, the AS#A determines media data information #F, where content of the media data information #F is described in the method 300, and details are not described herein again.

In S403, the AS#A sends the media data information #F to the UPF #A, and the UPF #A receives the media data information #F.

In S404, the UPF #A determines frame type information of media data #A.

Specifically, the UPF #A identifies, based on RTP header information of the media data #A and a frame sequence in a GOP, or based on an identifier #A, frame type information corresponding to the media service data, or determines, based on the RTP header information of the media service data, which media service data belongs to a group of frames.

A specific manner in which the UPF #A identifies, based on the real-time transport protocol (real-time transport protocol, RTP) header information of the media service data and the frame sequence in the GOP, the frame type information corresponding to the media service data may be as follows:

The UPF #A determines, based on a timestamp and a sequence number in the RTP header information of the media service data, which data packets of the media service belong to a same frame (for example, a frame #f1), where the timestamp in the RTP header information indicates time information at which the frame data is sampled, and if a same timestamp is carried, it means that the data belongs to a same frame, then determines, based on the frame sequence information in the GOP that is stored in a PDU session establishment process, a type of the frame #f1. For example, if the first frame #f1 is the first I frame of the first GOP of the service flow, a frame type of a data packet belonging to the frame #f1 is an I frame, and a subsequent frame type is determined based on the GOP sequence and an RTP header.

In S405, the UPF #A processes the media data #A and determines media data information #I.

Specifically, first, the UPF #A determines, based on the real-time transport protocol (real-time transport protocol, RTP) header information of the media data and a frame sequence in a GOP, or based on the identifier #A, frame type information corresponding to the media data, or determines, based on the RTP header information of the media data, which media data belongs to one group of frames.

A specific manner in which the UPF #A identifies, based on the RTP header information of the media data and the frame sequence in the GOP, the frame type information corresponding to the media data may be as follows:

The UPF #A determines, based on a timestamp and a sequence number in the RTP header information of the media data, which data packets of the media data belong to a same frame (for example, the frame #f1), where the timestamp in the RTP header information indicates time information at which the frame data is sampled, and if a same timestamp is carried, it means that the data belongs to a same frame, then determines, based on the frame sequence information in the GOP that is stored in a PDU session establishment process, a type of the frame #f1. For example, if the first frame #f1 is the first I frame of the first GOP of the service flow, a frame type of a data packet belonging to the frame #f1 is an I frame.

Then, the UPF #A adds corresponding identification information #H to a GTP layer based on the identified frame type information of the media data, where the identification information #H identifies data packets that belong to a same frame or identifies a frame type of the media data, and determines the media data information #I.

Specifically, after identifying that the frame type of the group of data packets (for example, p1, p2, and p3) that belong to the frame #f1 and that are of the media data is the I frame, the UPF #A adds "00" as the identification information #H to GTP layers of the p1, p2, and p3, and determines the media data information #I based on the p1, p2, and p3 and the identification information #H of the GTP layers of the p1, p2, and p3.

Alternatively, the UPF #A represents, based on the RTP header information and the frame sequence in the GOP, a group of data packets belonging to a same frame by using a same identifier. For example, "00" represents an I frame, "01" represents a P frame, and "10" represents a B frame.

Alternatively, the UPF #A copies the sequence number in the RTP header information of the media data packet to the GTP layer of the data packet.

In a possible implementation, the UPF #A adds sequence number information to data packets in a same frame, to ensure that the data packets belonging to the same frame are not out of order during transmission.

In a possible implementation, the sequence number information added by the UPF #A to the data packet is ranked between frames, that is, data packets of a plurality of frames are sorted in a unified manner, to ensure that data packets of a same type of frames are not out of order during transmission.

In S406, the UPF #A sends the media data information #I to the RAN #A.

Optionally, in S407, the UE #A sends jitter buffer status information #J to the RAN #A.

Specifically, the jitter buffer status information #J may be jitter buffer size information #J1 (that is, buffered to-be-played media data of the service) at a moment k (the moment k herein refers to a $k^{th}$ frame interval, or may be understood as a $k^{th}$ frame, where k is an integer), or the UE #A may be used to store maximum buffer information #J2 of the media data.

In a possible implementation, the jitter buffer status information #J sent by the UE #A further includes sequence number information of all frames in a jitter buffer at the moment k, and the sequence number may be a GOP sequence number or a frame sequence number.

In a possible implementation, the jitter buffer status information #J sent by the UE #A further includes type information of all frames in a jitter buffer at the moment k, for example, type information of an I frame, a B frame, or a P frame.

In a possible implementation, the UE #A may periodically notify the RAN #A side of a jitter buffer status of the UE #A by using radio resource control (radio resource control, RRC) information or a packet data convergence protocol (packet data convergence protocol, PDCP) layer, where the jitter buffer status may be notified by using a PDCP layer extension bit or may be notified by multiplexing another PDCP layer information bit.

In S408, the RAN #A determines adjustment information #M, where the adjustment information #M indicates the UE #A to perform corresponding adjustment.

Specifically, the RAN #A determines the buffer adjustment information #M at a moment k+n (where n is an offset at the moment k, and n is an integer) for the UE #A based on information #D, and/or the media data information #I, and/or the information #J sent by the UE #A, and/or a jitter buffer #B 1 of the UE #A at the moment k, and/or network condition information (where the network condition information refers to a first transmission rate of a link between the RAN #A and the UE #A). The buffer adjustment information #M indicates a buffer size or a playback rate of the UE #A.

Specifically, the RAN #A may determine the buffer adjustment information #M based on the information #D in the following manners:

Manner 1

The RAN #A determines a buffer size of the UE #A at the moment k+n based on encoding information. The encoding information includes at least one of the following: a frame rate of the media data, a frame type of the media data, and a data amount of media data belonging to a same frame, and the media data is media data that arrives at the RAN #A at the moment k. For example, for media data whose frame rate is 30 FPS, a buffer size of the UE #A at the moment k+n is set to 100 M, and for media data whose frame rate is 25 FPS, a buffer size of the UE #A at the moment k+n is set to 50 M; for media data whose frame type is an I frame, a buffer size of the UE #A at the moment k+n is set to 20 M, and for media data whose frame type is a P frame, a buffer size of the UE #A at the moment k+n is set to 15 M. A buffer size of the UE #A at the moment k+n may alternatively be set based on a data amount of media data that belongs to a same frame through sensing. For example, if the data amount of the media data that belongs to the same frame through sensing at the moment k is 5 M, a buffer size of the UE #A at the moment k+n is set to 50 M; or if the data amount of the media data that belongs to the same frame through sensing at the moment k is 10 M, a buffer size of the UE #A at the moment k+n is set to 80 M.

The RAN #A determines a playback rate of the UE #A at the moment k+n based on the encoding information. The encoding information includes at least one of the following: a frame rate of the media data, a frame type of the media data, and a data amount of the media data belonging to a same frame, and the media data is media data that arrives at the RAN #A at the moment k. For example, for media data whose frame rate is 30 FPS, a specific quantity of frames of remaining types other than the I frame in a playback buffer are skipped by the UE #A at the moment k+n (for example, four frames may be skipped) (a speed at which a human eye recognizes coherent images is 24 frames per second. As long as a playback speed is greater than 24 frames per second, image coherence is not affected. In addition, due to a GOP image encoding feature, discarding some other frames other than a key frame has no substantial impact), and for media data whose frame rate is 25 FPS, the UE #A is set to skip a specific quantity of frames of remaining types other than the I frame in a playback buffer at the moment k+n (for example, two frames may be skipped); for media data whose frame type is an I frame, the UE #A is set to skip a specific quantity of frames of remaining types other than the I frame in a playback buffer at the moment k+n (for example, four frames may be skipped), and for media data whose frame type is a P frame, the UE #A is set to skip a specific quantity of frames of remaining types other than the I frame in a playback buffer at the moment k+n (for example, two frames may be skipped). A playback speed of the UE #A at the moment k+n may alternatively be set based on a data amount of media data that belongs to a same frame through sensing. For example, if a data amount of media data that belongs to a same frame through sensing at the moment k is 5 M, the UE #A is set to skip a specific quantity of frames of remaining types other than the I frame in a playback buffer at the moment k+n (for example, two frames may be skipped); or if a data amount of media data that belongs to a same frame through sensing at the moment k is 10 M, the UE #A is set to skip a specific quantity of frames of remaining types other than the I frame in a playback buffer at the moment k+n (for example, four frames may be skipped).

Manner 2

The RAN #A determines a buffer size of the UE #A at the moment k+n based on jitter buffer initial threshold information. For example, for media data whose jitter buffer initial threshold is 5 M, the buffer size of the UE #A at the moment k+n is set to 20 M, and for media data whose jitter buffer initial threshold is 10 M, the buffer size of the UE #A at the moment k+n is set to 50 M.

The RAN #A determines a playback rate of the UE #A at the moment k+n based on the jitter buffer initial threshold information. For example, for the media data whose jitter buffer initial threshold is 5M, the UE #A is set to skip a specific quantity of frames of remaining types other than the I frame in a playback buffer at the moment k+n (for example, two frames may be skipped), and for the media data whose jitter buffer initial threshold is 10M, the UE #A is set to skip a specific quantity of frames of remaining types other than the I frame in a playback buffer at the moment k+n (for example, four frames may be skipped).

Manner 3

The RAN #A determines a buffer size of the UE #A at the moment k+n based on tolerable delay information. For example, for media data whose tolerable delay is 5 ms, the buffer size of the UE #A at the moment k+n is set to 20 M, and for media data whose tolerable delay is 2 ms, the buffer size of the UE #A at the moment k+n is set to 40 M.

For a manner in which the RAN #A determines a playback rate of the UE #A at the moment k+n based on tolerable delay information, refer to the foregoing Manner 1 or Manner 2. Details are not described herein again.

Specifically, the RAN #A may determine the buffer adjustment information #M based on the media data information #1 in the following manners:

Manner 4

The RAN #A determines a buffer size of the UE #A at the moment k+n based on an identifier of a frame type of a GTP layer in the media data information #I. For example, if an identifier of the GTP layer in the media data information #I is "00", and a frame type corresponding to the identifier is an I frame, the buffer size of the UE #A at the moment k+n is set to 50 M.

For a manner in which the RAN #A determines a playback rate of the UE #A at the moment k+n based on an identifier of a frame type of a GTP layer in the media data information #I, refer to the foregoing Manner 1 or Manner 2. Details are not described herein again.

Manner 5

The RAN #A determines a buffer size of the UE #A at the moment k+n based on a data amount of the media data information #1. For example, if a data amount of media data information #I that arrives at the RAN #A at the moment k is 1 M, a buffer size of the UE #A at the moment k+n is set to 20 M.

For a manner in which the RAN #A determines a playback rate of the UE #A at the moment k+n based on a data amount of the media data information #I, refer to the foregoing Manner 1 or Manner 2. Details are not described herein again.

Specifically, the RAN #A may determine the buffer adjustment information #M based on the buffer status information #J in the following manners:

Manner 6

The RAN #A determines a buffer size of the UE #A at the moment k+n based on a size of an idle buffer at the moment k used by the UE #A to store media data. For example, whether the idle buffer of the UE #A exceeds 50 M is determined. If the idle buffer exceeds 50 M, the buffer size of the UE #A at the moment k+n is set to 60 M; or if the idle buffer of the UE #A does not exceed 50 M, the buffer size of the UE #A at the moment k+n is set to 80 M.

For a manner in which the RAN #A determines a playback rate of the UE #A at the moment k+n based on a size of an idle buffer at the moment k used by the UE #A to store media data, refer to the foregoing Manner 1 or Manner 2. Details are not described herein again.

The RAN #A determines a buffer size of the UE #A at the moment k+n based on a buffer size at the moment k used by the UE #A to store to-be-played media data (the to-be-played media data refers to media data that has been stored in a buffer of the UE #A but has not been played). For example, whether the buffer used by the UE #A to store the to-be-played media data exceeds 30 M is determined. If the buffer exceeds 30 M, the buffer size of the UE #A at the moment k+n is set to 70 M; or if the buffer does not exceed 30 M, the buffer size of the UE #A at the moment k+n is set to 50 M.

Manner 7

The RAN #A determines a buffer size of the UE #A at the moment k+n based on a first transmission rate at the moment k. For example, whether the first transmission rate exceeds 50 Mbps is determined. If the first transmission rate exceeds 50 Mbps, the buffer size of the UE #A at the moment k+n is set to 80 M; or if the first transmission rate does not exceed 50 Mbps, the buffer size of the UE #A at the moment k+n is set to 60 M.

For a manner in which the RAN #A determines a playback rate of the UE #A at the moment k+n based on a first transmission rate at the moment k, refer to the foregoing Manner 1 or Manner 2. Details are not described herein again.

It should be understood that the foregoing manner is merely an example for description. The RAN #A determines the buffer adjustment information #M at the moment k+n (where n is an offset at the moment k, and n is an integer) for the UE #A based on other content of the information #D, other content of the media data information #I, other content of the buffer status information #J, or first transmission rate information. All is within the protection scope of this application.

It should be understood that the RAN #A may further combine the foregoing manners to determine the buffer adjustment information #M of the UE #A at the moment k+n, for example, set a buffer size or a playback rate of the UE #A at the moment k+n for the media data #A based on the jitter buffer initial threshold information and the frame rate information. For example, for media data whose frame rate is 25 FPS and whose jitter buffer initial threshold is 5 M, the buffer size of the UE #A at the moment k+n for the media data #A is set to 20 M. Other manners are deduced by analogy. Details are not described herein again in this application.

It should be understood that the UE #A may alternatively determine the buffer size of the UE #A at the moment k+n by using the foregoing manner or a combination of the foregoing manners, and perform corresponding adjustment. Details are not described herein in this application.

In a possible implementation, the RAN #A determines a jitter buffer #B1 of the UE #A at the moment k based on the media data information #I, calculates a jitter buffer #B2 of the UE #A at a moment k+1 or the moment k+n, and may further determine a target jitter buffer #B3 based on the jitter buffer #B2, the jitter buffer #B 1, and maximum buffer information #J2, or determine a corresponding playback speed of the UE #A, and determine corresponding adjustment information #M. The jitter buffer #B2 may be calculated in the following manners:

Manner a

The RAN #A determines, based on the identification information #H in the media data information #I, a frame type or which data packets belong to a same frame, then determines the jitter buffer #B1 of the UE #A at the moment k, and calculates the jitter buffer #B2 of the UE #A at the moment k+1 (where the moment k herein refers to a $k^{th}$ frame interval, or may be understood as that a frame currently being played is a $k^{th}$ frame, and k is an integer). The step includes:

(1) For example, jitter buffer initial threshold=5. First, the RAN #A sends five frames to the UE #A based on the value of the threshold, and in this case, it is determined that jitter buffer #B1=5, and k=5. In addition, the RAN #A may learn that the playback speed of the UE #A is a playback speed of FPS frames per second.

(2) A size of the jitter buffer #B2 needed by the UE #A at the sixth frame interval (k+1=6) is calculated according to Formula (1):

$$L_{B(k+1)} = L_{B(k)} - 1 + \left\lfloor \frac{V_{a\_frames}}{\Delta t * R_k} \right\rfloor \quad \text{or} \quad L_{B(k+1)} = L_{B(k)} - 1 + \left\lfloor \frac{V}{\Delta t * R_k} \right\rfloor \quad (1)$$

$$B(k) = \{ X_{k,1}, X_{k,2}, ..., X_{k,Q1} \} \quad (2)$$

$$B(k+1) = \{ X_{k+1,1}, X_{k+1,2}, ..., X_{k+1,Q2} \} \quad (3)$$

In Formula (1), $B(k+1)$ is a frame set buffered by the UE #A at the moment k+1, and $L_{B(k+1)}$ is a buffer size (represented by a length of the frame set, that is, a quantity of frames in the frame set) occupied by the frame set of the UE #A at the moment k+1. Optionally, the RAN #A ensures, based on the maximum buffer information #J2, that $L_{B(k+1)}$ does not exceed a maximum buffer value. Similarly, $B(k)$ is a frame set buffered by the UE #A at the moment k. $L_{B(k)}$ is a buffer size (represented by a length of the frame set, that is, a quantity of frames in the frame set) occupied by the frame set of the UE #A at the moment k. a_frames is a frame type (for example, the frame type may be an I frame, a P frame, or a B frame). $V_{a\_frames}$ is a data amount corresponding to a frame type of a frame that arrives at the RAN #A. $V$ is a data amount of data packets that is counted after the RAN #A learns, based on identification information of a GTP layer of the media data packets that arrive, which data packets belong to a same frame. $\Delta t$ is a time period used by the UE #A to play a frame, that is, a time period used by the AS#A to transmit the frame. $R_k$ is a transmission rate of a link between the RAN #A and the UE #A at the moment k. Optionally, $R_k$ may be a statistical average value of the link between the RAN #A and the UE #A in a period of time. Optionally, $L_{B(k)}$ may be a buffer size (represented by a length of the frame set, that is, a quantity of frames in the frame set) that is occupied by the frame set at the moment k and that is reported by the UE #A. For example, the UE #A periodically reports the buffer size occupied by the frame set at the moment k.

In Formula (2), $X_{k,1}$ is a frame in the buffer of the UE #A at the moment k, and Q1 frames form a frame set $B(k)$. Similarly, in Formula (3), $X_{k-1,1}$ is a frame in the buffer of the UE #A at the moment k+1, and Q2 frames form a frame set $B(k+1)$.

(3) The RAN #A may further determine the target jitter buffer #B3 based on the jitter buffer #B2, the jitter buffer #B1, and the maximum buffer information #J2, or determine a playback speed of the UE #A, and determine the corresponding adjustment information #M.

In a possible implementation, the target jitter buffer #B3 may be determined based on a size relationship between the jitter buffer #B2 and the jitter buffer #B 1, or the target jitter buffer #B3 may be determined further based on the maximum buffer information #J2, and the corresponding adjustment information #M is determined based on the target jitter buffer #B3.

Specifically, if jitter buffer #B2=jitter buffer #B1, the adjustment information #M indicates to maintain the jitter buffer #B1 of the UE #A.

If jitter buffer #B2<jitter buffer #B1, the adjustment information #M indicates to adjust a buffer value of the UE #A to the jitter buffer #B2, or the adjustment information #M indicates to maintain the jitter buffer #B1 of the UE #A.

If a maximum buffer value of the maximum buffer information #J2 is jitter buffer #B5, and jitter buffer #B5 >_ jitter buffer #B2>jitter buffer #B1, the adjustment information #M indicates to adjust a buffer value of the UE #A to the jitter buffer #B2, or a playback speed of the UE #A may be accelerated when a buffer of the UE #A is adjusted. For example, the adjustment information #M indicates the UE #A to discard some frames and not to play the frames, that is, a quantity of frames to be skipped (a speed at which a human eye recognizes coherent images is 24 frames per second. As long as the playback speed is greater than 24 frames per second, image coherence is not affected. In addition, due to a GOP image encoding feature, discarding some other frames other than a key frame has no substantial impact).

If jitter buffer #B2 >_ jitter buffer #B5, the adjustment information #M indicates to adjust a buffer value of the UE #A to the jitter buffer #B5, or a playback speed of the UE #A may be accelerated when a buffer of the UE #A is adjusted. For example, the adjustment information #M indicates the UE #A to discard some frames and not to play the frames, that is, a quantity of frames to be skipped.

In a possible implementation, the RAN #A may send the adjustment information #M to the UE #A by using RRC information or PDCP layer extension bit information.

Manner b

The RAN #A determines, based on the identification information #H in the media data information #I, a frame type or which data packets belong to the same frame, then determines the jitter buffer #B1 of the UE #A at the moment k, and calculates the jitter buffer #B2 of the UE #A at the moment k+n (where the moment k herein refers to a $k^{th}$ frame interval, or may be understood as that a frame currently being played is a $k^{th}$ frame, k is an integer, and n is an integer). The step includes:

(1) For example, when k=0, $L_{B(k=0)}$ = 0. The RAN #A may learn a playback speed of the UE #A.
(2) The RAN #A calculates, according to Formula (4), a size of the jitter buffer #B2 needed by the UE #A at a $(k+n)^{th}$ frame interval:

$$L_{B(k+n)} = L_{B(k)} - n + \left\lfloor \frac{\sum_{k=0}^{n} V_{a\_frames,k}}{\sum_{k=0}^{n} \Delta t * R_k} \right\rfloor \quad \text{or} \quad L_{B(k+n)} = L_{B(k)} - n + \left\lfloor \frac{\sum_{k=0}^{n} V_k}{\sum_{k=0}^{n} \Delta t * R_k} \right\rfloor \quad (4)$$

$$B(k) = \{ X_{k,1}, X_{k,2}, ..., X_{k,Q1} \} \quad (5)$$

$$B(k+n) = \{ X_{k+n,1}, X_{k+n,2}, ..., X_{k+n,Q2} \} \quad (6)$$

In Formula (4), $B(k + n)$ is a frame set buffered by the UE #A at the moment k+n. $L_{B(k+n)}$ is a buffer size (represented by a length of the frame set, that is, a quantity of frames in the frame set) occupied by the frame set of the UE #A at the moment k+n. Optionally, the RAN #A ensures, based on the maximum buffer information #J2, that $L_{B(k+n)}$ does not exceed a maximum buffer value. Similarly, $B(k)$ is a frame set buffered by the UE #A at the moment k. $L_{B(k)}$ is a buffer size (represented by a length of the frame set, that is, a quantity of frames in the frame set) occupied by the frame set of the UE #A at the moment k. n is an integer greater than or equal to 0. a_frames is a frame type (for example, the frame type may be an I frame, a P frame, or a B frame). $V_{a\_frames,k}$ is a data amount corresponding to a frame type of a frame that arrives at the RAN #A. $V_k$ is a data amount of data packets that is counted after the RAN #A learns, based on identification information of a GTP layer of the media data packets that arrive, which data packets belong to a same frame. $\Delta t$ is a time period used by the UE #A to play a frame, that is, a time period used by the AS#A to transmit the frame. $R_k$ is a transmission rate of a link between the RAN #A and the UE #A at the moment k. Optionally, $R_k$ may be a statistical average value of the link between the RAN #A and the UE #A in a period of time. Optionally, $L_{B(k)}$ may be a buffer size (represented by a length of the frame set, that is, a quantity of frames in the frame set) that is occupied by the frame set at the moment k and that is reported by the UE #A. For example, the UE #A periodically reports the buffer size occupied by the frame set at the moment k.

In Formula (2), $X_{k,l}$ is a frame in the buffer of the UE #A at the moment k, and Q1 frames form a frame set $B(k)$. Similarly, in Formula (3), $X_{k+n,1}$ is a frame in the buffer of the UE #A at the moment k+n, and Q2 frames form a frame set $B(k + n)$.

(3) The RAN #A may further determine the target jitter buffer #B3 based on the jitter buffer #B2, the jitter buffer #B1, and the maximum buffer information #J2, or determine a playback speed of the UE #A, and determine the corresponding adjustment information #M.

In a possible implementation, the target jitter buffer #B3 may be determined based on a size relationship between the jitter buffer #B2 and the jitter buffer #B1, or the target jitter buffer #B3 may be determined further based on the maximum buffer information #J2, and the corresponding adjustment information #M is determined based on the target jitter buffer #B3.

Specifically, if jitter buffer #B2=jitter buffer #B1, the adjustment information #M indicates to maintain the jitter buffer #B 1 of the UE #A.

If jitter buffer #B2<jitter buffer #B 1, the adjustment information #M indicates to adjust a buffer value of the UE #A to the jitter buffer #B2, or the adjustment information #M indicates to maintain the jitter buffer #B1 of the UE #A.

If a maximum buffer value of the maximum buffer information #J2 is jitter buffer #B5, and jitter buffer #B5 >_ jitter buffer #B2>jitter buffer #B1, the adjustment information #M indicates to adjust a buffer value of the UE #A to the jitter buffer #B2, or a playback speed of the UE #A may be accelerated when a buffer of the UE #A is adjusted. For example, the adjustment information #M indicates the UE #A to discard some frames and not to play the frames, that is, a quantity of frames to be skipped (a speed at which a human eye recognizes coherent images is 24 frames per second. As long as the playback speed is greater than 24 frames per second, image coherence is not affected. In addition, due to a GOP image encoding feature, discarding some other frames other than a key frame has no substantial impact).

If jitter buffer #B2 ≥ jitter buffer #B5, the adjustment information #M indicates to adjust a buffer value of the UE #A to the jitter buffer #B5, or a playback speed of the UE #A may be accelerated when the buffer of the UE #A is adjusted. For example, the adjustment information #M indicates the UE #A to discard some frames and not to play the frames, that is, a quantity of frames to be skipped.

In a possible implementation, the RAN #A may send the adjustment information #M to the UE #A by using RRC information or PDCP layer extension bit information.

Optionally, in S409, the RAN #A optimizes transmission of the media data.

Specifically, the RAN #A performs resource adjustment and/or transmission speed optimization based on the media data information #I and/or the information #J sent by the UE #A, or determines whether to discard the current frame.

A manner in which the RAN #A side optimizes the transmission speed includes: calculating required $R_k$ based on a playback threshold requirement of the UE #A and/or comprehensively considering of a network condition, and adjusting a transmission speed or a priority of media data. For example, to ensure a smooth playback requirement or cope with a current unstable network condition, in a case in which a frame in a buffer of the UE #A is limited to be not less than three frames, required $R_k$ may be calculated according to a condition $L_{B(k+1)} \geq 3$ ; or when a quantity of frames in a buffer of the UE #A is less than that of other UE, and the network condition is unstable, media data is first transmitted to the UE #A.

A manner of performing resource adjustment on the RAN #A side is as follows: Flexible resource scheduling may be performed by comprehensively considering requirements of a plurality of pieces of UE. For example, there are 100 frames in a buffer of UE#1, and there is only one frame in a buffer of UE#2. In a time period of transmitting a group of frames to the UE#2, 100 frames in the buffer of the UE#1 meet a playback requirement. In this case, more resources may be used to accelerate transmission to the UE#2, or high-priority transmission of media data to the UE#2 is performed.

A manner in which the RAN #A side determines whether a currently arrived frame is discarded includes: determining, based on a type or a frame sequence number of a currently arrived frame, and/or a playback speed of the UE #A side, and/or a tolerable delay and/or $R_k$, whether a subsequent frame of a frame currently arriving at the RAN #A side has started to be played. Alternatively, when it is estimated that the subsequent frame has started to be played when the frame currently arriving at the RAN #A side arrives at the UE #A side, the media frame is discarded; otherwise, the media frame is transmitted.

For example, the RAN #A side records a frame sequence number when starting to transmit the media data. It is assumed that a playback speed of the UE #A side is 1 FPS. According to statistics and calculation, a sequence number of a frame currently played by the UE #A is 10, and a sequence number of a frame currently arriving at the RAN #A side is 9. Therefore, the frame with the frame sequence number 9 is discarded.

For another example, the RAN #A side records a sequence of frames sent in each GOP when the RAN #A side starts to transmit the media data. It is assumed that a playback speed of the UE #A side is 1 FPS. According to statistics and calculation, a frame currently played by the UE #A is a P frame in the second GOP, and a frame currently arriving at the RAN #A side is a B frame in the second GOP. It can be learned according to the frame sequence (for example, IBPBP...) that if the B frame does not need to be played and does not need to be used as a reference frame of other frames, the B frame is determined to be discarded.

For another example, the RAN #A side may further determine, based on a playback speed of the UE #A side, a type of a frame that currently arrives at the RAN #A, a data amount of the corresponding frame, and $R_k$ , whether the UE #A has played a subsequent frame of the frame when the current frame arrives at the UE #A, or whether a tolerable delay is exceeded. In this case, whether to discard the frame is determined. Specifically, it is assumed that the playback speed of the UE #A is 1 FPS, the RAN #A determines, according to statistics and calculation, that the UE #A is currently playing a fifth frame, the tolerable delay is 50 ms, the type of the frame that currently arrives at the RAN #A is an I frame, the data amount is 5 KB, the frame sequence number is 7, and $R_k$ is 2.5 KB/s. In this case, a time period for transmitting the current frame is 2s, and a time period for the UE #A to play a sixth frame plus the tolerable delay is 1.05s, which is less than 2s. Therefore, it may be determined that the frame cannot reach the UE #A before the tolerable delay, and the frame is determined to be discarded.

In S410, the RAN #A sends the adjustment information #M to the UE #A, and the UE #A receives the adjustment information #M.

In S411, the RAN #A determines and sends media data information #N.

Specifically, the RAN #A determines the media data information #N based on the media data information #I, and sends the media data information #N to the UE #A.

In a possible implementation, when the media data information #I carries the identifier #A, the RAN #A needs to remove the identifier #A to determine the media data information #N.

In a possible implementation, sequence transmission of frame types may be ensured based on a sequence number of a data packet in one frame (in this case, the sequence number is ranked only in one frame). For example, it is ensured that after a data packet of an I frame type is transmitted, another subsequent frame type is transmitted.

Specifically, transmission is performed based on a decoding sequence of frames, and the decoding sequence of the frames may be consistent with or inconsistent with that of the GOP.

In a possible implementation, sequence numbers on data packets of a plurality of frames (in this case, sequence numbers are sorted across the plurality of frames, that is, sequence numbers of ranking of inter-frame data packets) may be used to ensure that data packets of a same frame type can also be transmitted in sequence when frame types are transmitted in sequence. For example, for $f1_B$ and $f2_B$ that belong to a same frame type B, $f1_B$ in sequence is transmitted, and then $f2_B$ is transmitted.

In S412, the UE #A performs corresponding adjustment based on the adjustment information #M.

Specifically, the UE #A determines target jitter buffer #B4 based on the adjustment information #M, or correspondingly determines a playback speed (for example, a quantity of frames to be skipped, or a sequence number of a specific skipped frame).

For example, if the adjustment information #M indicates that the target jitter buffer #B4 of the UE #A is 100 M, the UE #A adjusts, according to the indication, the buffer to 100 M to store the media data #N.

For another example, the adjustment information #M indicates that the UE #A skips four frames of other types than the I frame, and the UE #A skips four frames according to the indication and does not play the four frames, where the four frames are frames of other types than the I frame.

Other manners in which the UE #A performs corresponding adjustment based on the adjustment information #M are deduced by analogy. Details are not described in this application.

In embodiments of this application, the RAN #A assists, based on the parameter related to the media data #A and the frame type of the media data #A and/or the data amount of the media data #A, the UE in determining a buffer size used to buffer the media data #A, and assists the UE in determining a playback policy for to-be-played media data that belongs to a same service as the media data #A, where the playback policy may be whether the UE performs frame skipping processing on the to-be-played media data during playing of the to-be-played media data or a quantity of to-be-skipped frames of the UE, to enable the UE to meet a jitter buffer requirement of playing a real-time media service with a large amount of data. In addition, the real-time buffer adjustment performed based on the data amount may avoid frame loss caused by insufficient buffer. This improves smoothness and accuracy of playing the real-time media data with a large amount of data. On the other hand, the RAN #A may further optimize the transmission rate of the media data #A based on the foregoing parameter and/or the media data #A, or adjust, when a plurality of pieces of UE transmit data, priorities of media data transmission corresponding to the plurality of pieces of UE. This improves real-time user experience of a media service.

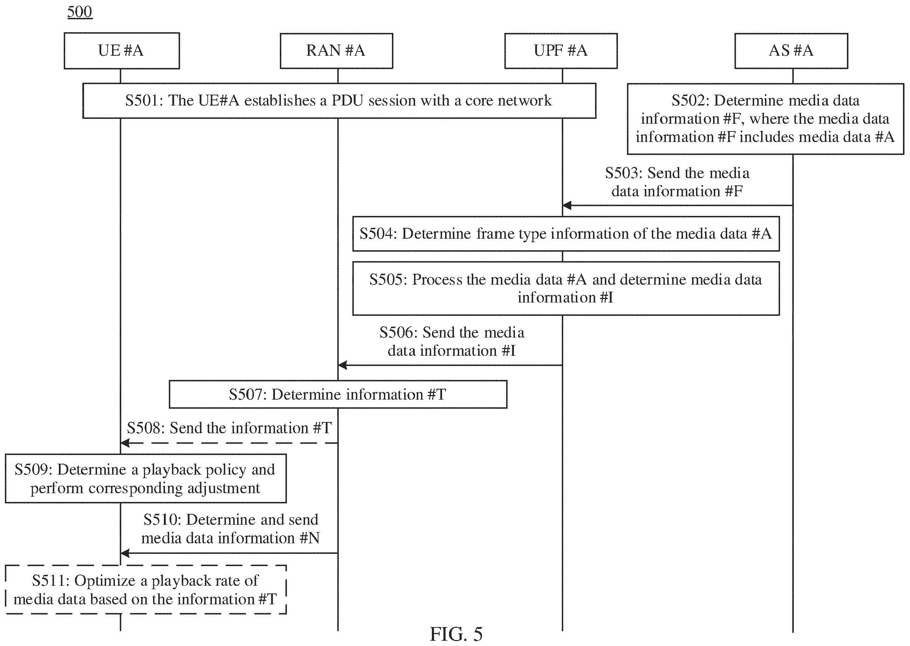

FIG. 5 is a schematic flowchart of an example of a data processing method 500 according to an embodiment of this application.

In S501, the UE #A establishes a PDU session with a core network. For a process of establishing a PDU session, refer to the method 300. Details are not described herein again in this application.

In S502, the AS#A determines media data information #F. The media data information #F includes media data #A, and other content is described in the method 300. Details are not described herein again.

In S503, the AS#A sends the media data information #F to the UPF #A, and the UPF #A receives the media data information #F.

In S504, the UPF #A determines frame type information of the media data #A. For a specific process, refer to the method S404.

In S505, the UPF #A processes the media data #A and determines media data information #I. For a specific process, refer to the method S405.

In S506, the UPF #A sends the media data information #I to the RAN #A, and the RAN #A receives the media data information #I.

In S507, the RAN #A determines information #T, where the information #T is used to assist the UE #A in determining a playback policy.

Specifically, the RAN #A determines the information #T based on the media data information #I, and/or a data amount of the media data packet, and/or a network rate, where the information #T includes a data amount or a frame type of the media data packet sent to the UE #A, and/or a minimum frame sequence number and/or a network rate (a first transmission rate between the RAN #A and the UE #A).

In a possible implementation, in S508, the RAN #A sends the information #T to the UE #A, and the UE #A receives the information #T.

In a possible implementation, the RAN #A may send the information #T to the UE #A by using RRC information or a PDCP layer.

In S509, the UE #A determines the playback policy and performs corresponding adjustment.

Specifically, the playback policy includes a size of a target jitter buffer or adjustment of a playback rate, and the UE #A sets, based on a size of a target jitter buffer, a buffer for storing the media data, or performs frame skipping processing on to-be-played media data.

Specifically, the UE #A calculates a jitter buffer #B2 of the UE #A at a moment k+1 or k+n based on the information #T and/or a jitter buffer #B1 of the UE #A at a moment k, may further determine a target jitter buffer #B3 based on the jitter buffer #B2, the jitter buffer #B 1, and maximum buffer information #J2 of the UE #A, and sets, based on the target jitter buffer #B3, a buffer for storing the media data. The jitter buffer #B2 may be calculated in the following manners:

Manner a

The UE #A determines the jitter buffer #B1 of the UE #A at the moment k, and then calculates the jitter buffer #B2 of the UE #A at the moment k+1 based on the data amount information and the network rate information in the information #T (where the moment k herein refers to a $k^{th}$ frame interval, or may be understood as that a frame currently being played is a $k^{th}$ frame, and k is an integer). The step includes:

(1) For example, jitter buffer initial threshold threshold=5. In this case, it is determined that jitter buffer #B1=5, and k=5.
(2) A size of the jitter buffer #B2 needed by the UE #A at sixth frame interval (k+1=6) is calculated according to Formula (1):

$$L_{B(k+1)} = L_{B(k)} - 1 + \left\lfloor \frac{V_{a\_frames}}{\Delta t * R_k} \right\rfloor \quad \text{or} \quad L_{B(k+1)} = L_{B(k)} - 1 + \left\lfloor \frac{V}{\Delta t * R_k} \right\rfloor \quad (1)$$

$$B(k) = \{ X_{k,1}, X_{k,2}, ..., X_{k,Q1} \} \quad (2)$$

$$B(k+1) = \{ X_{k+1,1}, X_{k+1,2}, ..., X_{k+1,Q2} \} \quad (3)$$

In Formula (1), $B(k+1)$ is a frame set buffered by the UE #A at the moment k+1. $L_{B(k+1)}$ is a buffer size (represented by a length of the frame set, that is, a quantity of frames in the frame set) occupied by the frame set of the UE #A at the moment k+1. Optionally, the UE #A ensures, based on the maximum buffer information #J2, that $L_{B(k+1)}$ does not exceed a maximum buffer value. Similarly, $B(k)$ is a frame set buffered by the UE #A at the moment k. $L_{B(k)}$ is a buffer size (represented by a length of the frame set, that is, a quantity of frames in the frame set) occupied by the frame set of the UE #A at the moment k. a_frames is a frame type (for example, the frame type may be an I frame, a P frame, or a B frame). $V_{a\_frames}$ is a data amount corresponding to a frame type of a frame that arrives at the RAN #A. $V$ is a data amount of data packets that is counted after the RAN #A learns, based on identification information of a GTP layer of the media data packets that arrive, which data packets belong to a same frame. $\Delta t$ is a time period used by the UE #A to play a frame, that is, a time period used by the AS#A to transmit the frame. $R_k$ is a transmission rate of a link between the RAN #A and the UE #A at the moment k. Optionally, $R_k$ may be a statistical average value of the link between the RAN #A and the UE #A in a period of time.
In Formula (2), $X_{k,1}$ is a frame in the buffer of the UE #A at the moment k, and Q1 frames form a frame set $B(k)$. Similarly, in Formula (3), $X_{k+1,1}$ is a frame in the buffer of the UE #A at the moment k+1, and Q2 frames form a frame set $B(k+1)$.
(3) The UE #A determines the target jitter buffer #B3 based on the jitter buffer #B2 and the jitter buffer #B 1, or determines the playback speed of the UE #A, and performs corresponding adjustment.
In a possible implementation, that the target jitter buffer #B3 is determined based on a size relationship between the jitter buffer #B2 and the jitter buffer #B 1 specifically includes:
If jitter buffer #B2=jitter buffer #B 1, the jitter buffer #B 1 of the UE #A is maintained.
If jitter buffer #B2<jitter buffer #B1, a buffer value of the UE #A is adjusted to the jitter buffer #B2, or the jitter buffer #B 1 of the UE #A is maintained.
If a maximum buffer value of the maximum buffer information #J2 is jitter buffer #B5, and jitter buffer #B5 >_ jitter buffer #B2>jitter buffer #B1, a buffer value of the UE #A is adjusted to the jitter buffer #B2, or a playback speed of the UE #A may be accelerated when a buffer of the UE #A is adjusted. For example, some frames are discarded and are not played, that is, a quantity of frames to be skipped (a speed at which a human eye recognizes coherent images is 24 frames per second. As long as the playback speed is greater than 24 frames per second, image coherence is not affected. In addition, due to a GOP image encoding feature, discarding some other frames other than a key frame has no substantial impact).
If jitter buffer #B2 $\geq$ jitter buffer #B5, a buffer value of the UE #A is adjusted to the jitter buffer #B5, or a playback speed of the UE #A may be accelerated when the buffer of the UE #A is adjusted. For example, some frames are discarded and are not played, that is, a quantity of frames to be skipped.

Manner b

The UE #A determines the jitter buffer #B 1 of the UE #A at the moment k, and then calculates the jitter buffer #B2 of the UE #A at the moment k+n based on the data amount information and the network rate information in the information #T (where the moment k herein refers to a $k^{th}$ frame interval, or may be understood as that a frame currently being played is a $k^{th}$ frame, and k is an integer). The step includes:

(1) For example, when k=0, $L_{B(k=0)}$ = 0.
(2) The UE #A calculates, according to Formula (4), a size of the jitter buffer #B2 needed by the UE #A at a $(k+n)^{th}$ frame interval:

$$L_{B(k+n)} = L_{B(k)} - n + \left\lfloor \frac{\sum_{k=0}^{n} V_{a\_frames,k}}{\sum_{k=0}^{n} \Delta t * R_k} \right\rfloor \quad or \quad L_{B(k+n)} = L_{B(k)} - n + \left\lfloor \frac{\sum_{k=0}^{n} V_k}{\sum_{k=0}^{n} \Delta t * R_k} \right\rfloor \quad (4)$$

$$B(k) = \{ X_{k,1}, X_{k,2}, ..., X_{k,Q1} \} \quad (5)$$

$$B(k+n) = \{ X_{k+n,1}, X_{k+n,2}, ..., X_{k+n,Q2} \} \quad (6)$$

In Formula (4), $B(k + n)$ is a frame set buffered by the UE #A at the moment k+n. $L_{B(k+n)}$ is a buffer size (represented by a length of the frame set, that is, a quantity of frames in the frame set) occupied by the frame set of the UE #A at the moment k+n. Optionally, the RAN #A ensures, based on the maximum buffer information #J2, that $L_{B(k+n)}$ does not exceed a maximum buffer value. Similarly, $B(k)$ is a frame set buffered by the UE #A at the moment k. $L_{B(k)}$ is a buffer size (represented by a length of the frame set, that is, a quantity of frames in the frame set) occupied by the frame set of the UE #A at the moment k. n is an integer greater than or equal to 0. a_frames is a frame type (for example, the frame type may be an I frame, a P frame, or a B frame). $V_{a\_frames,k}$ is a data amount corresponding to a frame type of a frame that arrives at the RAN #A. $V_k$ is a data amount of data packets that is counted after the RAN #A learns, based on identification information of a GTP layer of the media data packets that arrive, which data packets belong to a same frame. $\Delta t$ is a time period used by the UE #A to play a frame, that is, a time period used by the AS#A to transmit the frame. $R_k$ is a transmission rate of a link between the RAN #A and the UE #A at the moment k. Optionally, $R_k$ may be a statistical average value of the link between the RAN #A and the UE #A in a period of time.

In Formula (2), $X_{k,1}$ is a frame in the buffer of the UE #A at the moment k, and Q1 frames form a frame set $B(k)$. Similarly, in Formula (3), $X_{k+n,1}$ is a frame in the buffer of the UE #A at the moment k+n, and Q2 frames form a frame set $B(k + n)$.

(3) The UE #A determines the target jitter buffer #B3 based on the jitter buffer #B2 and the jitter buffer #B1, or determines a playback speed of the UE #A, and performs corresponding adjustment.

In a possible implementation, that the target jitter buffer #B3 is determined based on a size relationship between the jitter buffer #B2 and the jitter buffer #B1 specifically includes:

If jitter buffer #B2=jitter buffer #B 1, the jitter buffer #B 1 of the UE #A is maintained.

If jitter buffer #B2<jitter buffer #B1, a buffer value of the UE #A is adjusted to the jitter buffer #B2, or the jitter buffer #B1 of the UE #A is maintained.

If a maximum buffer value of the maximum buffer information #J2 is jitter buffer #B5, and jitter buffer #B5 >_ jitter buffer #B2>jitter buffer #B1, a buffer value of the UE #A is adjusted to the jitter buffer #B2, or a playback speed of the UE #A may be accelerated when a buffer of the UE #A is adjusted. For example, some frames are discarded and are not played, that is, a quantity of frames to be skipped (a speed at which a human eye recognizes coherent images is 24 frames per second. As long as the playback speed is greater than 24 frames per second, image coherence is not affected. In addition, due to a GOP image encoding feature, discarding some other frames other than a key frame has no substantial impact).

If jitter buffer #B2 $\geq$ jitter buffer #B5, a buffer value of the UE #A is adjusted to the jitter buffer #B5, or a playback speed of the UE #A may be accelerated when the buffer of the UE #A is adjusted. For example, some frames are discarded and are not played, that is, a quantity of frames to be skipped.

In S510, the RAN #A determines media data information #N, and sends the media data information #N to the UE #A.

The RAN #A determines and sends the media data information #N based on the media data information #I. Specifically, when the media data information #I carries an identifier #A, the identifier #A needs to be deleted to determine the media data information #N, and the UE #A receives the media data information #N.

In a possible implementation, sequence transmission of frame types may be ensured based on a sequence number of a data packet in one frame (in this case, the sequence number is ranked only in one frame). For example, it is ensured that after a data packet of an I frame type is transmitted, a subsequently decoded frame is transmitted, and transmission is performed based on a decoding sequence.

In a possible implementation, sequence numbers on data packets of a plurality of frames (in this case, sequence numbers are sorted across the plurality of frames, that is, sequence numbers of ranking of inter-frame data packets) may be used to ensure that data packets of a same frame type can also be transmitted in sequence when frame types are transmitted in sequence. For example, for $f1_B$ and $f2_B$ that belong to a same frame type B, $f1_B$ in sequence is transmitted, and then $f2_B$ is transmitted.

In a possible implementation, in S511, the UE #A optimizes the playback rate of the media data based on the information #T.

Specifically, the UE #A judges whether to discard a minimum frame in the media data information #N based on a minimum frame sequence number and a maximum played frame sequence number in the information #T. For example, if the minimum frame sequence number of the information #T is smaller than the maximum played frame sequence number, a frame with the minimum frame sequence number of the information #T may be discarded when the media data sent by the RAN #A is received.

In embodiments of this application, the UE #A determines, based on the parameter related to the media data #A and the frame type of the media data #A and/or the data amount of the media data #A, a buffer size used to buffer the media data #A, and assists in determining a playback policy for to-be-played media data that belongs to a same service as the media data #A, where the playback policy may be whether the UE performs frame skipping processing on the to-be-played media data during playing of the to-be-played media data or a quantity of to-be-skipped frames of the UE, to enable the UE to meet a jitter buffer requirement of playing a real-time media service with a large amount of data. In addition, the real-time buffer adjustment performed based on the data amount may avoid frame loss caused by insufficient buffer. This improves smoothness and accuracy of playing the real-time media data with a large amount of data and improves real-time user experience of a media service.

It should be understood that the media data in the foregoing embodiments of this application is not limited to a video, and the foregoing method is also applicable to an audio service. Details are not described in this application again.

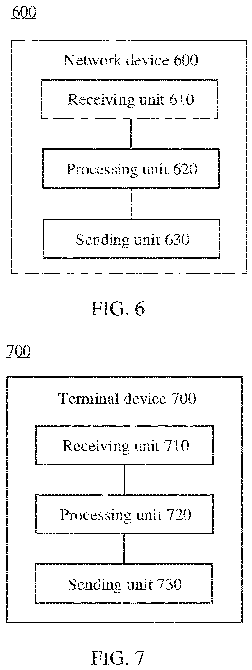

The foregoing describes the data processing method according to embodiments of this application with reference to FIG. 1 to FIG. 5. The following describes devices according to embodiments of this application with reference to FIG. 6 to FIG. 9.

FIG. 6 is a schematic block diagram of an example of a network device according to an embodiment of this application. As shown in FIG. 6, the network device 600 includes:

a receiving unit 610, configured to obtain first information of first media data, where the first information indicates a size of the first media data;

configured to obtain first information of first media data and buffer status information of a terminal device UE, where the first information indicates a size of the first media data; or

configured to receive first parameter information, where the first parameter information indicates a type of first media data; and configured to receive the first media data;

a processing unit 620, configured to determine a playback policy for the first media data based on the first information, where the playback policy indicates a buffer size or a playback rate;

configured to determine a transmission policy for the first media data based on the first information and the buffer status information, where the transmission policy indicates a transmission rate of the first media data and/or a transmission priority of the first media data, or whether the first media data is discarded; or

configured to determine first identification information based on the first parameter information, where the first identification information identifies a frame type of the first media data; and

a sending unit 630, configured to send the playback policy to the terminal device UE; or

configured to send second media data to a radio access network RAN device, where the second media data includes the first identification information and the first media data.

In a possible implementation, the first information is frame type information, or identification information corresponding to a frame type of the first media data and data amount information corresponding to the frame type.

In a possible implementation, the parameter information further includes one or more of the following: stream description information of the first media data, frame rate FPS information of the first media data, a buffer threshold of the first media data, where the buffer threshold indicates a buffer size of media data played by the UE, buffer status information of the UE, network condition information, and tolerable delay information, where the tolerable delay information indicates a time period for which the UE waits for arrival of a next frame of a currently played frame.

In a possible implementation, a playback policy for the first media data is determined based on the parameter information.

In a possible implementation, the playback policy information is carried in radio resource control RRC information or packet data convergence protocol PDCP information; and the RAN sends the playback policy information to the UE.

In a possible implementation, the buffer status information includes a buffer size occupied by media data to be played by the UE, information about a maximum buffer that can be used by the UE to store the first media data, or frame status information of to-be-played media data.

In a possible implementation, the buffer status information is carried in radio resource control RRC information or packet data convergence protocol PDCP information, and is sent by the UE to the RAN.

In a possible implementation, the identification information corresponding to the frame type of the first media data is carried in general packet radio service tunneling protocol GTP information of the first media data.

In a possible implementation, the first parameter information includes:

data type information of the first media data;
identification information corresponding to a data type of the first media data; or
group of pictures GOP frame sequence information of the first media data and real-time transport protocol RTP information of the first media data.

In a possible implementation, the first identification information is carried in information about a general packet radio service tunneling protocol GTP layer of the second media data.

FIG. 7 is a schematic block diagram of an example of a terminal device according to an embodiment of this application. As shown in FIG. 7, the terminal device 700 includes:

a sending unit 730, configured to send buffer status information of the UE to a radio access network RAN, where the buffer status information is used by the RAN to determine a playback policy for the UE, and the playback policy indicates a buffer size or a playback rate;
a receiving unit 710, configured to receive the playback policy from the RAN; and
a processing unit 720, configured to execute the playback policy.

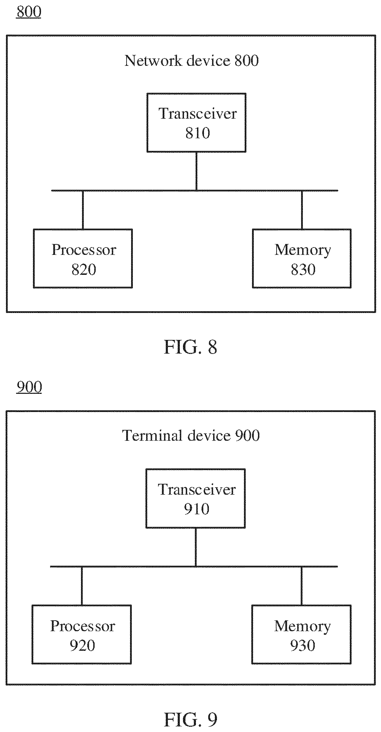

FIG. 8 is a schematic block diagram of another example of a network device according to an embodiment of this application. As shown in FIG. 8, the network device 800 includes a transceiver 810 and a processor 820. The processor 820 is configured to support the network device in performing corresponding functions of the network device in the foregoing methods. Optionally, the network device may further include a memory 830, and the memory 830 is configured to couple to the processor 820, and store program instructions and data that are necessary for the network device. The processor 820 is specifically configured to execute the instructions stored in the memory 830, and when the instructions are executed, the network device performs the methods performed by the network device in the foregoing methods.

It should be noted that the network device 600 shown in FIG. 6 may be implemented by the network device 800 shown in FIG. 8. For example, the receiving unit 610 and the sending unit 630 shown in FIG. 6 may be implemented by the transceiver 810, and the processing unit 620 may be implemented by the processor 820.

FIG. 9 is a schematic block diagram of another example of a terminal device according to an embodiment of this application. As shown in FIG. 9, the terminal device 900 includes a transceiver 910 and a processor 920. The processor 920 is configured to support the terminal device in performing corresponding functions of the terminal device in the foregoing methods. Optionally, the terminal device may further include a memory 930. The memory 930 is configured to couple to the processor 920, and store program instructions and data that are necessary for the terminal device. The processor 920 is specifically configured to execute the instructions stored in the memory 930, and when the instructions are executed, the terminal device performs the methods performed by the terminal device in the foregoing methods.

It should be noted that the terminal device 700 shown in FIG. 7 may be implemented by using the terminal device 900 shown in FIG. 9. For example, the receiving unit 710 and the sending unit 730 shown in FIG. 7 may be implemented by the transceiver 910, and the processing unit 920 may be implemented by the processor 920.

It should be noted that the data processing method and the device in the embodiments of this application are described by using a network device and a terminal device as an example in this application. It should be understood that the data processing method in embodiments of this application may alternatively be implemented by a baseband chip, and the baseband chip is configured to implement related operations of the network device or the terminal device in embodiments of this application.

It should be further noted that an input/output circuit of the baseband chip can be configured to implement related operations of the transceiver of the network device or the terminal device.

It should be understood that, the processor in embodiments of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA), or another programmable logic device, discrete gate or transistor logic device, discrete hardware component, or the like.

It should be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitation, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions. When the computer program instructions are loaded or executed on a computer, all or some of the processes or the functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, and a magnetic tape), an optical medium (for example, a digital versatile disc (digital versatile disc, DVD)), or a semiconductor medium. The semiconductor medium may be a solid state drive.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units.

Some or all of the units may be selected based on actual requirements to achieve the objectives of the solutions of embodiments.

In addition, function units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (ROM), a random access memory (RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data processing method, performed in a radio access network RAN device, and comprising:

   obtaining first information of first media data, wherein the first information indicates a size of the first media data;
   determining a playback policy for the first media data based on the first information, wherein the playback policy indicates a buffer size or a playback rate; and
   sending the playback policy to a terminal device UE.

2. The method according to claim 1, wherein the first information is frame type information; or
   the first information is identification information corresponding to a frame type of the first media data and data amount information corresponding to the frame type.

3. The method according to claim 1 or 2, wherein the obtaining first information of first media data comprises:
   obtaining parameter information of the first media data, wherein the parameter information comprises the first information, and the parameter information further comprises one or more of the following: stream description information of the first media data, frame rate FPS information of the first media data, buffer status information of the UE, network condition information, or a buffer threshold of the first media data, wherein the buffer threshold indicates a buffer size of media data played by the UE.

4. The method according to claim 3, wherein the determining a playback policy for the first media data based on the first information comprises:
   determining the playback policy for the first media data based on the parameter information.

5. The method according to claim 3 or 4, wherein the buffer status information comprises one or more of the following: a buffer size occupied by media data to be played by the UE, information about a maximum buffer that can be used by the UE to store the first media data, or frame status information of to-be-played media data.

6. The method according to any one of claims 1 to 5, wherein the sending the playback policy to a terminal device UE further comprises:

   information about the playback policy is carried in radio resource control RRC information or packet data convergence protocol PDCP information; and
   the RAN sends the information about the playback policy to the UE.

7. A data processing method, performed in a radio access network RAN device, and comprising:

   obtaining first information of first media data and buffer status information of a terminal device UE, wherein the first information indicates a size of the first media data; and

determining a transmission policy for the first media data based on the first information and the buffer status information, wherein the transmission policy indicates a transmission rate of the first media data and/or a transmission priority of the first media data, or whether the first media data is discarded.

8.  The method according to claim 7, wherein the first information is frame type information; or the first information is identification information corresponding to a frame type of the first media data and data amount information corresponding to the frame type.

9.  The method according to claim 7 or 8, wherein the obtaining first information of first media data and buffer status information of a terminal device UE comprises:
    obtaining parameter information of the first media data, wherein the parameter information comprises the first information and the buffer status information of the terminal device UE, and the parameter information further comprises one or more of the following:
    stream description information of the first media data, frame rate FPS information of the first media data, a buffer threshold of the first media data, wherein the buffer threshold indicates a buffer size of media data played by the UE, network condition information, and tolerable delay information, wherein the tolerable delay information indicates a time period for which the UE waits for arrival of a next frame of a currently played frame.

10. The method according to any one of claims 7 to 9, wherein the buffer status information comprises one or more of the following: a buffer size occupied by media data to be played by the UE, information about a maximum buffer that can be used by the UE to store the first media data, or frame status information of to-be-played media data.

11. The method according to any one of claims 7 to 10, wherein the buffer status information comprises:
    the buffer status information is carried in radio resource control RRC information or packet data convergence protocol PDCP information received from the UE.

12. The method according to claim 2 or 8, wherein the identification information corresponding to the frame type of the first media data is carried in general packet radio service tunneling protocol GTP information of the first media data.

13. A data processing method, performed in a user plane function UPF network element, and comprising:

    receiving first parameter information, wherein the first parameter information indicates a type of first media data;
    receiving the first media data;
    determining first identification information based on the first parameter information, wherein the first identification information identifies a frame type of the first media data; and
    sending second media data to a radio access network RAN device, wherein the second media data comprises the first identification information and the first media data.

14. The method according to claim 13, wherein the first parameter information comprises:

    data type information of the first media data;
    identification information corresponding to a data type of the first media data; or
    group of pictures GOP frame sequence information of the first media data and real-time transport protocol RTP information of the first media data.

15. The method according to claim 13 or 14, wherein the first identification information is carried in information about a general packet radio service tunneling protocol GTP layer of the second media data.

16. A data processing method, performed in a terminal device UE, comprising:

    sending buffer status information of the UE to a radio access network RAN, wherein the buffer status information is used to determine a playback policy of the UE, and the playback policy indicates a buffer size or a playback rate; and
    receiving the playback policy from the RAN.

17. The method according to claim 16, wherein the buffer status information comprises one or more of the following: a buffer size occupied by media data to be played by the UE, information about a maximum buffer that can be used by the UE to store first media data, or frame status information of to-be-played media data.

18. The method according to claim 16 or 17, wherein the buffer status information is carried in radio resource control RRC information or packet data convergence protocol PDCP information.

19. A data processing apparatus, wherein the apparatus comprises at least one processor and a communication interface, and the at least one processor is configured to invoke a computer program stored in at least one memory, so that the apparatus implements the method according to any one of claims 1 to 6.

20. A data processing apparatus, wherein the apparatus comprises at least one processor and a communication interface, and the at least one processor is configured to invoke a computer program stored in at least one memory, so that the apparatus implements the method according to any one of claims 7 to 12.

21. A data processing apparatus, wherein the apparatus comprises at least one processor and a communication interface, and the at least one processor is configured to invoke a computer program stored in at least one memory, so that the apparatus implements the method according to any one of claims 13 to 15.

22. A data processing apparatus, wherein the apparatus comprises at least one processor and a communication interface, and the at least one processor is configured to invoke a computer program stored in at least one memory, so that the apparatus implements the method according to any one of claims 16 to 18.

23. A computer-readable storage medium, wherein the computer-readable storage medium stores a computer program, and when the computer program is run,

    an apparatus is enabled to perform the method according to any one of claims 1 to 6;
    an apparatus is enabled to perform the method according to any one of claims 7 to 12;
    an apparatus is enabled to perform the method according to any one of claims 13 to 15, or
    an apparatus is enabled to perform the method according to any one of claims 16 to 18.

24. A chip system, comprising a processor, configured to invoke a computer program from a memory and run the computer program,

    to enable a communication apparatus on which the chip system is installed to perform the method according to any one of claims 1 to 6;
    to enable a communication apparatus on which the chip system is installed to perform the method according to any one of claims 7 to 12;
    to enable a communication apparatus on which the chip system is installed to perform the method according to any one of claims 13 to 15; or
    to enable a communication apparatus on which the chip system is installed to perform the method according to any one of claims 16 to 18.

25. A communication system, comprising:

    a network device, configured to perform the method according to any one of claims 1 to 6;
    configured to perform the method according to any one of claims 7 to 12; or
    configured to perform the method according to any one of claims 13 to 15; and
    a terminal device, configured to perform the method according to any one of claims 16 to 18.

26. A computer program product, wherein when the computer program product runs on a processor, the method according to any one of claims 1 to 18 is implemented.

FIG. 1

FIG. 2

EP 4 294 023 A1

300

| UE #A | RAN #A | AMF #A | SMF #A | UPF #A | PCF #A | AF #A |
|---|---|---|---|---|---|---|

**S301: Determine information #A, where the information #A is used for delivery of related parameters**

S304: Send a PDU session establishment/modification request

S302: Send the information #A

**S305: Initiate a session management policy and associate the PDU session establishment/ modification request**

S303: Send response information

**S306: Determine information #B, where a parameter in the information #B is a part of parameter information or all parameter information of the information #A**

S307: Send the information #B

S308: Send response information

| TO FIG. 3B | TO FIG. 3B | TO FIG. 3B | TO FIG. 3B | TO FIG. 3B | TO FIG. 3B | TO FIG. 3B |
|---|---|---|---|---|---|---|

FIG. 3A

CONT.
FROM
FIG. 3A

CONT.
FROM
FIG. 3A

CONT.
FROM
FIG. 3A

CONT.
FROM
FIG. 3A

CONT.
FROM
FIG. 3A

CONT.
FROM
FIG. 3A

CONT.
FROM
FIG. 3A

S309: Determine
and send
information #C,
where a parameter
in the information
#C is a part of
parameter
information or all
parameter
information of the
information #B

S311: Determine and
send information #D,
where a parameter in the
information #D is a part
of parameter information
or all parameter
information of the
information #B

S313: Send the
information #D

S312: Send response
information

S310: Detect corresponding
media data

S314: Receive the
information #D and detect
GTP layer information of the
media data

S315: Determine and send information #E

S316: The UE#A establishes a PDU session with a core network

FIG. 3B

EP 4 294 023 A1

400

UE #A

RAN #A

UPF #A

AS #A

S401: The UE#A establishes a PDU session with a core network

S402: Determine media data information #F, where the media data information #F includes media data #A

S403: Send the media data information #F

S404: Determine frame type information of the media data #A

S405: Process the media data #A and determine media data information #I

S406: Send the media data information #I

S407: Send jitter buffer status information #J

S408: Determine adjustment information #M, where the adjustment information #M indicates the UE#A to perform corresponding adjustment

S409: Optimize transmission of the media data

S410: Send the adjustment information #M

S411: Determine and send media data information #N

S412: Perform corresponding adjustment based on the adjustment information #M

FIG. 4

500

| UE #A | RAN #A | UPF #A | AS #A |
|---|---|---|---|

S501: The UE#A establishes a PDU session with a core network

S502: Determine media data information #F, where the media data information #F includes media data #A

S503: Send the media data information #F

S504: Determine frame type information of the media data #A

S505: Process the media data #A and determine media data information #I

S506: Send the media data information #I

S507: Determine information #T

S508: Send the information #T

S509: Determine a playback policy and perform corresponding adjustment

S510: Determine and send media data information #N

S511: Optimize a playback rate of media data based on the information #T

FIG. 5

600

Network device 600

Receiving unit 610

Processing unit 620

Sending unit 630

FIG. 6

700

Terminal device 700

Receiving unit 710

Processing unit 720

Sending unit 730

FIG. 7

800

Network device 800

Transceiver
810

Processor
820

Memory
830

FIG. 8

900

Terminal device 900

Transceiver
910

Processor
920

Memory
930

FIG. 9

## INTERNATIONAL SEARCH REPORT

| International application No. |
| --- |
| **PCT/CN2021/079055** |

| A. | CLASSIFICATION OF SUBJECT MATTER |
| --- | --- |
| | H04N 21/2387(2011.01)i |

According to International Patent Classification (IPC) or to both national classification and IPC

| B. | FIELDS SEARCHED |
| --- | --- |

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNPAT, CNKI, EPODOC, WPI: 流媒体, 帧, 大小, 播放, 速度, 速率, 缓存, 无线接入网, streaming media, frame, size, play, speed, buffer, RAN

| C. | DOCUMENTS CONSIDERED TO BE RELEVANT | |
| --- | --- | --- |
| Category* | Citation of document, with indication, where appropriate, of the relevant passages | Relevant to claim No. |
| X | CN 102771134 A (TELEFONAKTIEBOLAGET LM ERICSSON (PUBL)) 07 November 2012 (2012-11-07) description paragraphs 2-65, figure 3 | 1-6, 19, 23-26 |
| X | CN 101431720 A (HUAWEI TECHNOLOGIES CO., LTD.) 13 May 2009 (2009-05-13) description, pages 4-8 | 7-12, 16-18, 20, 22-26 |
| X | CN 102595199 A (ZTE CORP.) 18 July 2012 (2012-07-18) description, paragraphs 27-67, figures 1-2 | 13-15, 21, 23-26 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 November 2021** | **07 December 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/079055**

| Patent document cited in search report | | | Publication date (day/month/year) | Patent family member(s) | | | Publication date (day/month/year) |
|---|---|---|---|---|---|---|---|
| CN | 102771134 | A | 07 November 2012 | CA | 2786812 | A1 | 21 July 2011 |
| | | | | RU | 2012135473 | A | 27 February 2014 |
| | | | | US | 2018262712 | A1 | 13 September 2018 |
| | | | | EP | 2526674 | A1 | 28 November 2012 |
| | | | | JP | 2015144464 | A | 06 August 2015 |
| | | | | WO | 2011087439 | A1 | 21 July 2011 |
| | | | | AU | 2011205819 | A1 | 19 July 2012 |
| | | | | JP | 2013517674 | A | 16 May 2013 |
| | | | | US | 2011185058 | A1 | 28 July 2011 |
| | | | | US | 2021211606 | A1 | 08 July 2021 |
| CN | 101431720 | A | 13 May 2009 | None | | | |
| CN | 102595199 | A | 18 July 2012 | WO | 2012094916 | A1 | 19 July 2012 |

Form PCT/ISA/210 (patent family annex) (January 2015)